(19) Europäisches Patentamt
European Patent Office
Office européen des brevets

(11) **EP 4 210 400 A1**

(12) **EUROPEAN PATENT APPLICATION**
published in accordance with Art. 153(4) EPC

(43) Date of publication:
**12.07.2023 Bulletin 2023/28**

(21) Application number: **21874182.5**

(22) Date of filing: **03.09.2021**

(51) International Patent Classification (IPC):
**H04W 52/14** (2009.01)    **H04W 52/36** (2009.01)

(52) Cooperative Patent Classification (CPC):
**H04W 52/14; H04W 52/36**

(86) International application number:
**PCT/CN2021/116433**

(87) International publication number:
**WO 2022/068521 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020   CN 202011069900**

(71) Applicant: **Huawei Technologies Co., Ltd.
Shenzhen, Guangdong 518129 (CN)**

(72) Inventors:
• **JIN, Le
  Shenzhen, Guangdong 518129 (CN)**
• **PENG, Bingguang
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **UPLINK POWER CONTROL METHOD AND RELATED APPARATUS**

(57)    This application discloses an uplink power control method. A network device may periodically pre-schedule a PUSCH for a terminal, and the terminal may dynamically adjust maximum transmit power based on a transport block TB size in the PUSCH scheduled by the network device and an amount of to-be-sent uplink data. When the amount of the to-be-sent uplink data is less than the TB size scheduled by the network device, the terminal may decrease the maximum transmit power, and report a power headroom of the PUSCH to the network device by using a power headroom report PHR, so that the network device reduces the TB size and uplink transmit power of the terminal by reducing a quantity of resource blocks and/or a modulation order of an MCS. In this way, power consumption of the terminal is reduced while a delay of sending the uplink data by the terminal is reduced.

FIG. 8

## Description

This application claims priority to Chinese Patent Application No. 202011069900.3, filed with the China National Intellectual Property Administration on September 30, 2020 and entitled "UPLINK POWER CONTROL METHOD AND RELATED APPARATUS", which is incorporated herein by reference in its entirety.

## TECHNICAL FIELD

This application relates to the communication field, and in particular, to an uplink power control method and a related apparatus.

## BACKGROUND

Uplink pre-scheduling is a technology commonly used in a cellular network. Data services usually burst and are discontinuous. For uplink data, a base station does not know when a terminal is to send data, and therefore does not know when to perform uplink scheduling for the terminal and allocate an uplink transmission radio resource. Currently, the following two manners are used to resolve the foregoing problem:

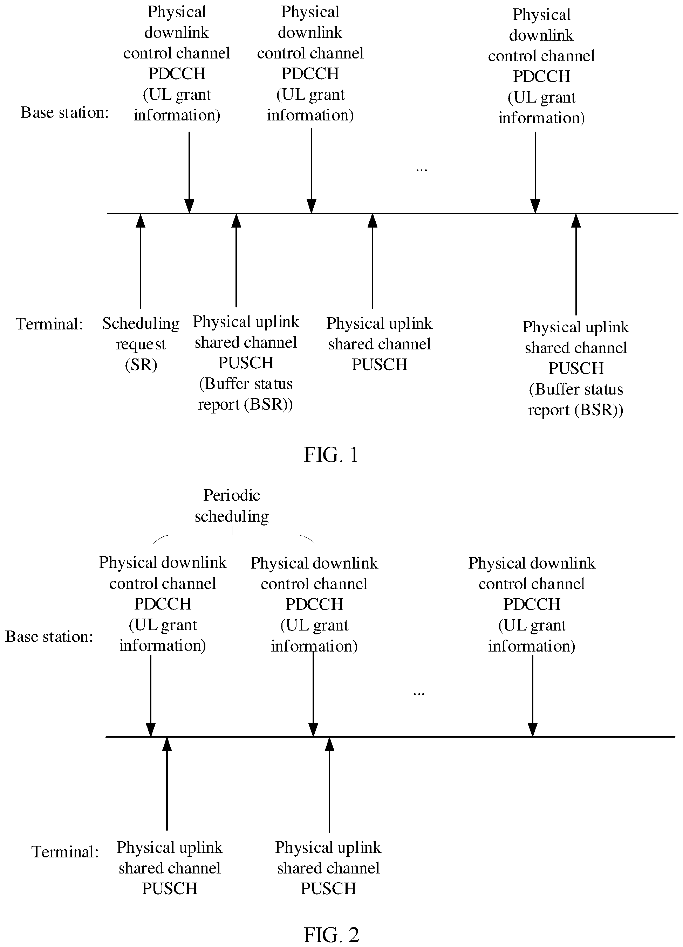

Manner 1: As shown in FIG. 1, a long term evolution (long term evolution, LTE) protocol and a new radio (new radio, NR) protocol support the following case: When the terminal has data to be sent, the terminal first sends a scheduling request (scheduling request, SR) to the base station. After receiving the SR, the base station schedules a physical uplink shared channel (physical uplink shared channel, PUSCH) for the terminal, and allocates a small quantity of radio resources to the terminal by using uplink grant (UL Grant) information. Then, the terminal may send a buffer status report (buffer status report, BSR) to the base station on the PUSCH, and the BSR may be used to notify the base station of an amount of uplink data to be sent on the terminal. Subsequently, the base station may schedule the PUSCH based on the BSR, and allocate a radio resource to the terminal by using the uplink grant (UL Grant) information. When all uplink data on the terminal is sent, the terminal reports a BSR to notify the base station that the terminal has no uplink data to be sent, and the base station stops scheduling the PUSCH.

Manner 2: As shown in FIG. 2, a pre-scheduling manner is generally used in a live network. The base station periodically schedules a PUSCH for the terminal in a period of time, and allocates a radio resource to the terminal by using uplink grant (UL Grant) information. When the terminal needs to send uplink data, the terminal may wait until a next scheduling period arrives, and send, on the PUSCH scheduled by the base station, the uplink data to be sent. When the terminal has no uplink data to be sent, the terminal may send, when a next scheduling period arrives, a padding (padding) packet on the PUSCH scheduled by the base station (in other words, the terminal sends data "0" on all PUSCHs).

In the manner 1, when the terminal has uplink data to be sent, the terminal needs to request, by using an SR sending process, the base station to schedule the PUSCH. In this case, a delay of sending the uplink data by the terminal is relatively long. In the manner 2, when the terminal has uplink data to be sent, the terminal does not need to request, by using an SR sending process, the base station to schedule the PUSCH. Therefore, a delay of sending the uplink data by the terminal is shorter than the delay in the manner 1. However, if the terminal has no uplink data to be sent, the terminal still needs to send the padding packet on the PUSCH scheduled by the base station, and consequently, power consumption is wasted.

Therefore, how to reduce power consumption of the terminal while reducing the delay of sending uplink data by the terminal is an urgent problem to be resolved in current research.

## SUMMARY

This application provides an uplink power control method and a related apparatus, so that when a base station enables pre-scheduling, a delay of sending uplink data by a terminal is reduced, and power consumption of the terminal is reduced.

According to a first aspect, this application provides an uplink power control system that includes a terminal and a network device. The network device is configured to deliver first resource information of a physical uplink shared channel PUSCH to the terminal by using downlink control information DCI carried on a physical downlink control channel PDCCH. The terminal is configured to report a first power headroom of the PUSCH to the network device when a transport block TB size corresponding to the first resource information is equal to a data amount of to-be-sent uplink data in a buffer at a radio link control RLC layer. The terminal is further configured to report a second power headroom of the PUSCH to the network device when the TB size corresponding to the first resource information is greater than the data amount of the to-be-sent uplink data, and the second power headroom is less than the first power headroom. The network device is further configured to deliver second resource information to the terminal based on the second power headroom of the PUSCH by using the DCI carried on the PDCCH, and the second resource information is different from the first resource information.

This embodiment of this application provides an uplink power control method. The network device may periodically pre-schedule the PUSCH for the terminal, and the terminal may dynamically adjust maximum transmit power based on a transport block (transport block, TB) size in the PUSCH scheduled by the network device and the amount of to-be-sent uplink data. When the amount of the to-be-sent uplink data is less than the TB size scheduled by the network device, the terminal may decrease the maximum transmit power, and report a power headroom of the PUSCH to the network device by using a power headroom report (power headroom report, PHR), so that the network device reduces the TB size and uplink transmit power of the terminal by reducing a quantity of resource blocks and/or a modulation order of an MCS. In this way, power consumption of the terminal is reduced while a delay of sending the uplink data by the terminal is reduced.

In a possible implementation, the terminal is specifically configured to: report a first power headroom report PHR to the network device when the transport block TB size corresponding to the first resource information is equal to the data amount of the to-be-sent uplink data, where the first PHR includes the first power headroom of the PUSCH; or report a second PHR to the network device when the transport block TB size corresponding to the first resource information is equal to the data amount of the to-be-sent uplink data, where the second PHR includes the second power headroom of the PUSCH.

In a possible implementation, the terminal is further configured to report a third power headroom of the PUSCH to the network device when the TB size corresponding to the first resource information is less than the data amount of the to-be-sent uplink data, where the third power headroom is greater than the first power headroom; and the network device is further configured to deliver third resource information to the terminal based on the third power headroom of the PUSCH by using the DCI carried on the PDCCH, where the third resource information is different from the first resource information.

In a possible implementation, that the second resource information is different from the first resource information specifically includes: when the second power headroom is greater than 0, a quantity of resource blocks RBs of the PUSCH in the second resource information is greater than a quantity of RBs of the PUSCH in the first resource information, and/or a modulation order of a modulation and coding scheme MCS in the second resource information is greater than a modulation order of an MCS in the first resource information.

In a possible implementation, that the second resource information is different from the first resource information specifically includes: when the second power headroom is less than 0, the quantity of resource blocks RBs of the PUSCH in the second resource information is less than the quantity of RBs of the PUSCH in the first resource information, and/or the modulation order of the MCS in the second resource information is less than the modulation order of the MCS in the first resource information.

In a possible implementation, that the second resource information is different from the first resource information specifically includes: when the second power headroom is equal to 0, the quantity of resource blocks RBs of the PUSCH in the second resource information is equal to the quantity of RBs of the PUSCH in the first resource information, and the modulation order of the MCS in the second resource information is the same as the modulation order of the MCS in the first resource information.

In a possible implementation, the terminal is further configured to: when the TB size corresponding to the first resource information is greater than the amount of the to-be-sent uplink data, determine first uplink dynamic maximum transmit power based on the first resource information and the amount of the to-be-sent uplink data; determine transmit power of the PUSCH and the second power headroom based on the first uplink dynamic maximum transmit power; and send the to-be-sent data in the buffer at the RLC layer to the network device at the transmit power of the PUSCH.

In a possible implementation, the terminal is specifically configured to: when the TB size corresponding to the first resource information is greater than the amount of the to-be-sent uplink data, determine the first uplink dynamic maximum transmit power by using the following formula:

$$P_{dyna.max} = P_{CMAX} - \Delta_{step},$$

where

$P_{dyna,max}$ is the first uplink dynamic maximum transmit power, $P_{CMAX}$ is maximum transmit power configured for the terminal in a communication protocol, and $\Delta_{step}$ is a preset power value.

In a possible implementation, the terminal is specifically configured to determine the transmit power of the PUSCH based on the first uplink dynamic maximum transmit power by using the following formula:

$$P_{PUSCH} = min \begin{cases} P_{dyna,max} \\ P_{CMAX} \\ P_{0\_PUSCH} + 10 \log_{10}(2^{\mu} \cdot M_{RB}^{PUSCH}) + \alpha \cdot \text{PL} + \Delta_{TF} + f \end{cases},$$

where

$P_{PUSCH}$ is the transmit power of the PUSCH, $P_{dyna,max}$ is the first uplink dynamic maximum transmit power, $P_{CMAX}$ is maximum transmit power configured for the terminal in a communication protocol, $P_{0\_PUSCH}$ is nominal power, the nominal power is used to represent power density of a signal that is sent by the terminal on the PUSCH and that the network device expects to receive, $\mu$ is a subcarrier spacing, $M_{RB}^{PUSCH}$ is a first resource block quantity of the PUSCH, $\alpha$ is a path loss compensation factor, $PL$ is a path loss, $\Delta_{TF}$ is a transmit power adjustment item associated with a transmission format, and $f$ is a power control accumulation of the PUSCH.

In a possible implementation, the terminal is specifically configured to determine the second power headroom of the PUSCH based on the first uplink dynamic maximum transmit power by using the following formula:

$$\text{PH}_{PUSCH} = \min\{P_{dyna,max}, P_{CMAX}\} - \{P_{0\_PUSCH} + 10 \log_{10}(2^{\mu} \cdot M_{RB}^{PUSCH}) + \alpha \cdot PL + \Delta_{TF} + f\},$$

where

$\text{PH}_{PUSCH}$ is the power headroom of the PUSCH, $P_{dyna,max}$ is the uplink dynamic maximum transmit power, $P_{CMAX}$ is maximum transmit power configured for the terminal in a communication protocol, $P_{0\_PUSCH}$ is nominal power, the nominal power is used to represent power density of a signal that is sent by the terminal on the PUSCH and that the network device expects to receive, $\mu$ is a subcarrier spacing, $M_{RB}^{PUSCH}$ is a first resource block quantity of the PUSCH, $\alpha$ is a path loss compensation factor, $PL$ is a path loss, $\Delta_{TF}$ is a transmit power adjustment item associated with a transmission format, and $f$ is a power control accumulation of the PUSCH.

In a possible implementation, the terminal is further configured to: when the TB size corresponding to the first resource information is less than the amount of the to-be-sent uplink data, determine the second uplink dynamic maximum transmit power by using the following formula:

$$P_{dyna.max} = P_{CMAX} + max\{10 \log_{10}(2^{\mu} \cdot B_{RLC}/TBS), 0\},$$

where

$P_{dyna.max}$ is the second uplink dynamic maximum transmit power, $P_{CMAX}$ is maximum transmit power configured for the terminal in a communication protocol, $\mu$ is a subcarrier spacing, $B_{RLC}$ is the data amount of the to-be-sent uplink data, and $TBS$ is the TB size corresponding to the first resource information;

the terminal is further configured to determine transmit power of the PUSCH and the third power headroom based on the second uplink dynamic maximum transmit power; and

the terminal is further configured to send the to-be-sent data in the buffer at the RLC layer to the network device at the transmit power of the PUSCH.

In a possible implementation, the terminal is further configured to determine transmit power of a sounding reference signal SRS and a power headroom of the SRS based on the first uplink dynamic maximum transmit power; the terminal is further configured to send the SRS to the network device at the transmit power of the SRS; the terminal is further configured to send the power headroom of the SRS to the network device; the network device is further configured to measure a signal to interference plus noise ratio SINR of the received SRS; and the network device is specifically configured to deliver the second resource information to the terminal based on the second power headroom of the PUSCH, the power headroom of the SRS, and the SINR of the SRS.

In a possible implementation, the terminal is specifically configured to determine the transmit power of the SRS based on the first uplink dynamic maximum transmit power by using the following formula:

$$P_{SRS} = min \begin{cases} P_{dyna,max} \\ P_{CMAX} \\ P_{0\_SRS} + 10 \log_{10}(2^{\mu} \cdot M_{RB}^{SRS}) + \alpha \cdot PL + \Delta_{TF} + h \end{cases},$$

where

P$_{SRS}$ is the transmit power of the SRS, $P_{dyna,max}$ is the first uplink dynamic maximum transmit power, $P_{CMAX}$ is maximum transmit power configured for the terminal in a communication protocol, $P_{0\_SRS}$ is nominal power of the SRS, the nominal power of the SRS is used to represent power density of the SRS that is sent by the terminal and that the network device expects to receive, $\mu$ is a subcarrier spacing, $M_{RB}^{SRS}$ is a resource block quantity of the SRS, $\alpha$ is a path loss compensation factor, $PL$ is a path loss, $\Delta_{TF}$ is a transmit power adjustment item associated with a transmission format, and $h$ is a power control accumulation of the SRS.

In a possible implementation, the terminal is specifically configured to determine the power headroom of the SRS based on the uplink dynamic maximum transmit power by using the following formula:

$$\text{PH}_{SRS} = \min\{P_{dyna,max}, P_{CMAX}\} - \{P_{0\_SRS} + 10\log_{10}(2^\mu \cdot M_{RB}^{SRS}) + \alpha \cdot PL + h\},$$

where

PH$_{SRS}$ is the transmit power of the SRS, $P_{dyna,max}$ is the uplink dynamic maximum transmit power, $P_{CMAX}$ is maximum transmit power configured for the terminal in a communication protocol, $P_{0\_SRS}$ is nominal power of the SRS, the nominal power of the SRS is used to represent power density of the SRS that is sent by the terminal and that the network device expects to receive, $\mu$ is a subcarrier spacing, $M_{RB}^{SRS}$ is a resource block quantity of the SRS, $\alpha$ is a path loss compensation factor, $PL$ is a path loss, and $h$ is a power control accumulation of the SRS.

In a possible implementation, the terminal is specifically configured to send, on a TB corresponding to the first resource information, a first part of data in the buffer at the RLC layer to the network device at the transmit power of the PUSCH.

In a possible implementation, the terminal is specifically configured to: send, by the terminal on a TB corresponding to the first resource information, all data in a buffer at the data link layer to the network device at the transmit power of the PUSCH, and send padding data to the network device in a remaining part of the TB of the first resource information.

According to a second aspect, this application provides an uplink power control method, including: receiving, by a terminal, first resource information that is of a PUSCH and that is delivered by a network device by using DCI carried on a PDCCH; reporting, by the terminal, a first power headroom of the PUSCH to the network device when a TB size corresponding to the first resource information is equal to a data amount of to-be-sent uplink data in a buffer at an RLC layer; reporting, by the terminal, the first power headroom of the PUSCH to the network device when the TB size corresponding to the first resource information is greater than the data amount of the to-be-sent uplink data; and receiving, by the terminal, second resource information delivered by the network device based on a second power headroom of the PUSCH by using the DCI carried on the PDCCH, where the second resource information is different from the first resource information.

In a possible implementation, the reporting, by the terminal, a first power headroom of the PUSCH to the network device specifically includes: reporting, by the terminal, a first power headroom report PHR to the network device, where the first PHR includes the first power headroom of the PUSCH; and the reporting, by the terminal, a second power headroom of the PUSCH to the network device specifically includes: reporting, by the terminal, a second PHR to the network device, where the second PHR includes the second power headroom of the PUSCH.

In a possible implementation, the method further includes: reporting a third power headroom of the PUSCH to the network device when the TB size corresponding to the first resource information is less than the data amount of the to-be-sent uplink data, where the third power headroom is greater than the first power headroom; and receiving, by the terminal, second resource information delivered by the network device based on the third power headroom by using the DCI carried on the PDCCH, where the third resource information is different from the first resource information.

In a possible implementation, that the second resource information is different from the first resource information specifically includes: when the second power headroom is greater than 0, a quantity of resource blocks RBs of the PUSCH in the second resource information is greater than a quantity of RBs of the PUSCH in the first resource information, and/or a modulation order of a modulation and coding scheme MCS in the second resource information is greater than a modulation order of an MCS in the first resource information; when the second power headroom is less than 0, the quantity of resource blocks RBs of the PUSCH in the second resource information is less than the quantity of RBs of the PUSCH in the first resource information, and/or the modulation order of the MCS in the second resource information is less than the modulation order of the MCS in the first resource information; and when the second power headroom is equal to 0, the quantity of resource blocks RBs of the PUSCH in the second resource information is equal to the quantity of RBs of the PUSCH in the first resource information, and the modulation order of the MCS in the second resource information is the same as the modulation order of the MCS in the first resource information.

In a possible implementation, the method further includes: when the TB size corresponding to the first resource information is greater than the amount of the to-be-sent uplink data, determining, by the terminal, first uplink dynamic maximum transmit power based on the first resource information and the amount of the to-be-sent uplink data; determining, by the terminal, transmit power of the PUSCH and the second power headroom based on the first uplink dynamic maximum transmit power; and sending, by the terminal, the to-be-sent data in the buffer at the RLC layer to the network device at the transmit power of the PUSCH.

In a possible implementation, the method further includes: determining, by the terminal, transmit power of a sounding reference signal SRS and power headroom of the SRS based on the first uplink dynamic maximum transmit power; sending, by the terminal, the SRS to the network device by using the transmit power of the SRS; and sending, by the terminal, the power headroom of the SRS to the network device; and the receiving, by the terminal, second resource information delivered by the network device based on a second power headroom of the PUSCH by using the DCI carried on the PDCCH specifically includes: delivering, by the terminal, the second resource information to the terminal based on the second power headroom of the PUSCH, the power headroom of the SRS, and a detected SINR of the SRS.

According to a third aspect, this application provides a terminal, including one or more processors and one or more memories. The one or more memories are coupled to the one or more processors. The one or more memories are configured to store computer program code. The computer program code includes computer instructions. When the one or more processors execute the computer instructions, the terminal is enabled to perform the uplink power control method in any possible implementation of either of the foregoing aspects.

According to a fourth aspect, an embodiment of this application provides a computer storage medium, including computer instructions. When the computer instructions are run on a terminal, the terminal is enabled to perform the uplink power control method in any possible implementation of any one of the foregoing aspects.

According to a fifth aspect, an embodiment of this application provides a computer program product. When the computer program product is run on a computer, the computer is enabled to perform the uplink power control method in any possible implementation of any one of the foregoing aspects.

According to a sixth aspect, an embodiment of this application provides a chip, including a processor. The processor is configured to invoke, from a memory, instructions stored in the memory and run the instructions, so that a terminal in which the chip is mounted is enabled to perform the uplink power control method in any possible implementation of any one of the foregoing aspects.

## BRIEF DESCRIPTION OF DRAWINGS

FIG. 1 is a schematic diagram of signaling interaction of radio resource scheduling in a conventional technology;
FIG. 2 is a schematic diagram of signaling interaction of another type of radio resource scheduling in a conventional technology;
FIG. 3 is a schematic diagram of a network system architecture of a radio access network according to an embodiment of this application;
FIG. 4 is a schematic diagram of a structure of a terminal according to an embodiment of this application;
FIG. 5 is a schematic diagram of a structure of a network device according to an embodiment of this application;
FIG. 6 is a schematic flowchart of an uplink power control method according to an embodiment of this application;
FIG. 7 is a schematic flowchart of an uplink power control method according to another embodiment of this application;
FIG. 8 is a schematic diagram of functional modules in a communication system according to an embodiment of this application;
FIG. 9 is a schematic diagram of a structure of a terminal according to another embodiment of this application; and
FIG. 10 is a schematic diagram of a structure of a radio frequency channel according to an embodiment of this application.

## DESCRIPTION OF EMBODIMENTS

The following clearly describes technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments of this application, unless otherwise specified, "a plurality of" means two or more.

Currently, when a base station periodically schedules a PUSCH for a terminal, the terminal may use a method of dynamically skipping sending of a PUSCH (skip uplink Tx dynamic). When the terminal has no uplink data to be sent, even if the base station schedules the PUSCH for the terminal, the terminal does not send data on the PUSCH. In this way, when the base station enables pre-scheduling, if the terminal has uplink data to be sent, an advantage of a low delay can be achieved, and if the terminal has no uplink data to be sent, the terminal may alternatively not send a padding packet, to reduce power consumption.

However, when the terminal uses the method of dynamically skipping sending of the PUSCH, after scheduling the PUSCH for the terminal, the base station does not know whether the terminal skips sending data on the PUSCH. Therefore, the base station cannot know whether the terminal reports uplink control information on the PUSCH or reports UCI on an uplink control channel (PUCCH). This limits, to some extent, a quantity of terminals that are in a cell of the base station and that can simultaneously support the method of dynamically skipping sending of the PUSCH.

In addition, when using the method of dynamically skipping sending of the PUSCH, the terminal depends on a discontinuous reception/transmission (discontinuous reception/transmission, DTX) detection capability of the base station. In other words, when the base station demodulates the PUSCH, the base station needs to identify whether the terminal skips sending data on the PUSCH or the terminal sends data on the PUSCH but a bit error is caused by a low signal-to-noise ratio. If the terminal skips sending data on the PUSCH, the base station does not need to schedule the terminal to retransmit data. If the bit error is caused by the low signal-to-noise ratio, the base station needs to schedule the terminal to retransmit data. However, DTX detection of the base station is not entirely reliable. If the DTX detection is incorrect, the following problems may be caused.

1. If the terminal skips sending data on the PUSCH but the base station mistakenly considers the data as a bit error when demodulating the PUSCH, the base station needs to schedule the terminal to retransmit data. The terminal sends the data (a padding packet) on the PUSCH again. In this way, power consumption of the terminal cannot be reduced. In addition, because the base station mistakenly considers the data as the bit error, a bit error rate increases, and the base station decreases an order of a modulation and coding scheme (modulation coding scheme), and consequently, an uplink sending rate of the terminal decreases, and an uplink delay increases. In addition, because the bit error rate increases, the base station increases transmit power of the terminal, and consequently, power consumption of the terminal increases.

2. If the base station mistakenly considers a bit error during modulation of the PUSCH as that the terminal skips sending data on the PUSCH, the base station does not schedule the terminal to retransmit data on the PUSCH. Consequently, a packet loss occurs in uplink data sent by the terminal. The terminal needs to retransmit a lost data packet at a layer 2 or an IP layer. Consequently, an uplink delay of the terminal increases.

An embodiment of this application provides an uplink power control method. A network device may periodically pre-schedule a PUSCH for a terminal, and the terminal may dynamically adjust maximum transmit power based on a transport block (transport block, TB) size in the PUSCH scheduled by the network device and an amount of to-be-sent uplink data. When the amount of the to-be-sent uplink data is less than the TB size scheduled by the network device, the terminal may decrease the maximum transmit power, and report a power headroom to the network device by using a power headroom report (power headroom report, PHR), so that the network device reduces the TB size and uplink transmit power of the terminal by reducing a quantity of resource blocks and/or a modulation order of an MCS. In this way, power consumption of the terminal is reduced while a delay of sending the uplink data by the terminal is reduced.

A network system architecture of a radio access network provided in an embodiment of this application is described below.

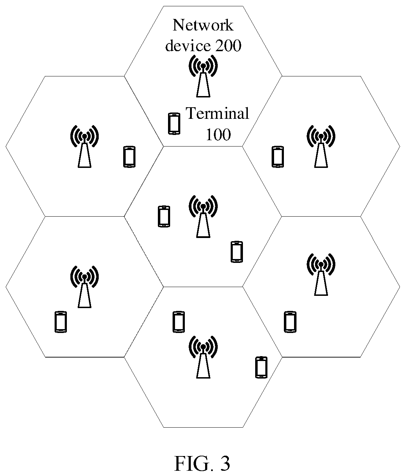

FIG. 3 is a schematic diagram of a network system architecture of a radio access network according to an embodiment of this application.

As shown in FIG. 3, the radio access network is divided into cellular cells. A terminal 100 in each cell and a network device 200 in the cell are linked by using an air interface, and exchange signaling and data by using the air interface. The access network may be based on a plurality of access technologies, and specifically depends on a used network standard. For example, in an NR network of a fifth generation mobile communication network (5th generation mobile networks, 5G), the network device 200 may be a next generation NodeB (next Generation NodeB, gNB), and the network device 200 may use a multiple access manner of orthogonal frequency division multiple access (orthogonal frequency division multiplexing access, OFDMA).

The network device 200 may be a device with a wireless receiving/transmitting function. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU), a gNB in a 5G NR network, a transmission point (TRP or TP), or a network node that forms a gNB or a transmission point, such as a baseband unit (BBU) or a distributed unit (distribution unit, DU).

In some network deployments, the gNB may include a central unit (centralized unit, CU) and a DU. The gNB may further include a radio frequency unit (radio unit, RU). The CU implements a part of functions of the gNB, and the DU implements a part of the functions of the gNB. For example, the CU implements functions of a radio resource control (radio resource control, RRC) layer and a packet data convergence protocol (packet data convergence protocol, PDCP) layer. The DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in this architecture, higher layer signaling such as RRC layer signaling or PHCP layer signaling may also be considered as being sent by the DU or sent by the DU and the RU. It may be understood that the network device 200 may be a CU node, a DU node, or a device including a CU node and a DU node. In addition, the CU may be classified as a network device in an access network RAN, or the CU may be classified as a network device in a core network (core network, CN). This is not limited herein.

The terminal 100 may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device in this embodiment of this application may be a mobile phone (mobile phone), a tablet computer (Pad), a computer with a wireless receiving/transmitting function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), or the like. An application scenario is not limited in this embodiment of this application.

To improve system performance, power control is often an important management function in a communication system. In the communication network, at least one node sends a signal to another node, and a purpose of power control is to enable, in the network, power of the signal sent by the at least one node to meet a system requirement when the signal arrives at the another node. The node herein may be the terminal 100 and the network device 200. For example, power control may enable power of a signal sent by the terminal 100 to meet a power requirement of the network device 200 when the signal reaches the network device 200. For example, the terminal 100 may send a signal to the network device 200. Because the network device 200 needs to receive and demodulate the signal, and power at which the network device 200 receives the signal cannot be excessively low. Therefore, the power at which the network device 200 receives the signal needs to be greater than a demodulation threshold.

A power headroom (power headroom, PH) report PHR is also a part of a power control phase. A power control headroom is a power difference between maximum transmit power that can be reached by the terminal 100 and power required by the terminal 100 to send a signal. In actual implementation, the power difference may be obtained by subtracting a linear value of transmit power required by the signal from a linear value of the maximum power, or may be obtained by subtracting a decibel (dB) value of the signal transmit power from a decibel (dB) value of the maximum power. In this way, this is equivalent to dividing the linear value of the maximum power by the linear value of the signal transmit power to obtain a result and then converting the result into a dB value. This case is also referred to as the power difference. Therefore, correspondingly, descriptions of a formula in this embodiment of this application are intended to describe a physical meaning of the power difference. The formula in this application may also be transformed among subtraction of the dB value, division of the linear value, subtraction of the linear value, and the like.

A PH value may be a positive number, 0, or a negative number. The PH value may be quantized. For example, the PH value is quantized to different quantization levels based on a specific quantization interval.

When a reporting condition of the PHR is met, the terminal 100 obtains the PH value, transfers the PH value to an information element corresponding to the PHR, and then sends the PHR to the network device 200 through a bearer channel. The information element of the PHR may be a MAC information element, and the bearer channel may be a PUSCH.

After receiving the PHR, the network device 200 may obtain PH information of the terminal 100 and the like from the PHR. The network device 200 may use the PH information of the terminal 100 to perform a power management procedure. For example, when the PH value of the terminal 100 received by the network device 200 is relatively small (a negative PH may also be referred to as a relatively small PH), it means that maximum transmit power that can be supported by the terminal 100 is already difficult to or cannot support sending of a current signal (for example, a signal on the PUSCH or a sounding reference signal (sounding reference signal, SRS)). In this case, the network device 200 may adjust, by using an algorithm, a resource (for example, a radio resource on the PUSCH) allocated to the terminal 100, for example, reduce a transport block size of the terminal 100 on the PUSCH. Alternatively, the network device 200 may adjust signal transmit power of the terminal 100, so that the terminal 100 can send a signal to the network device 200, to prevent the following case: Because a transmit power requirement is excessively large but maximum power is insufficient, actual transmit power density is lower than power density required by the network device 200, and consequently, quality of the signal sent by the terminal 100 deteriorates.

A structure of the terminal 100 provided in this embodiment of this application is described below.

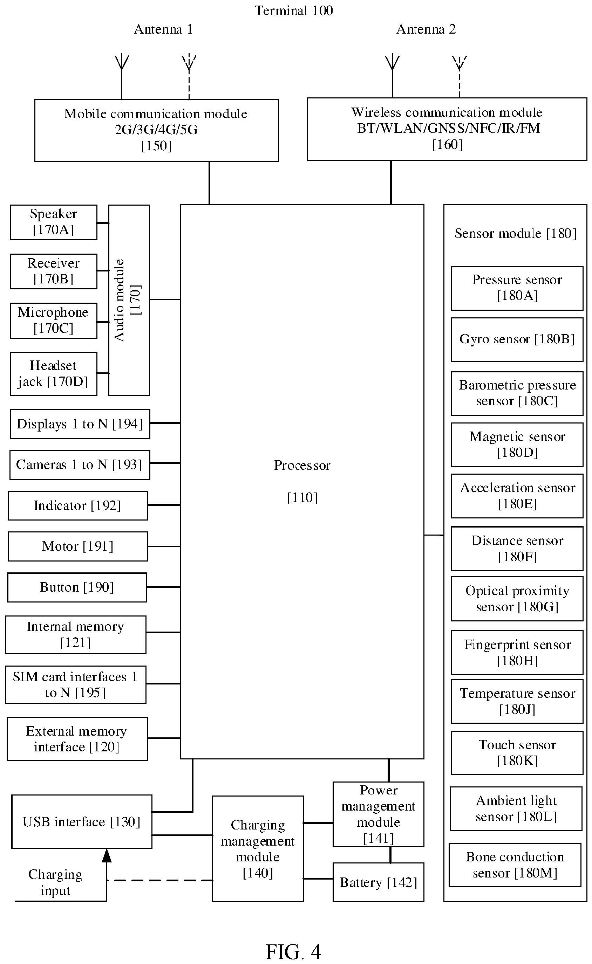

FIG. 4 is a schematic diagram of the structure of the terminal 100.

The terminal 100 is used as an example below to specifically describe this embodiment. It should be understood that the terminal 100 shown in FIG. 4 is merely an example, and the terminal 100 may have more or fewer components than those shown in FIG. 4, two or more components may be combined, or there may be different component configurations. The various components shown in FIG. 4 may be implemented in hardware including one or more signal processing circuits and/or application-specific integrated circuits, software, or a combination thereof.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal 100. In some other embodiments of this application, the terminal 100 may include more or fewer components than those shown in the figure, or some components may be combined, or some components may be split, or there may be different component layouts. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store an instruction or data that has been recently used or cyclically used by the processor 110. If the processor 110 needs to use the instruction or the data again, the processor may directly invoke the instruction or the data from the memory. This avoids repeated access and reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, 12S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like by using different I2C bus interfaces. For example, the processor 110 may be coupled to the touch sensor 180K by using the I2C interface, so that the processor 110 communicates with the touch sensor 180K by using the I2C bus interface, to implement a touch function of the terminal 100.

The 12S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 by using the PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 by using the CSI interface, to implement a photographing function of the terminal 100. The processor 110 communicates with the display 194 by using the DSI interface, to implement a display function of the terminal 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, a MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the terminal 100, or may be configured to transmit data between the terminal 100 and a peripheral device, or may be configured to connect to a headset for playing audio by using the headset. The interface may be further configured to connect to another electronic device such as an AR device.

It may be understood that an interface connection relationship between the modules shown in this embodiment of the present invention is merely an example for description, and does not constitute a limitation on the structure of the terminal 100. In some other embodiments of this application, the terminal 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal 100. The charging management module 140 supplies power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may be alternatively disposed in a same component.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution applied to the terminal 100, including 2G, 3G, 4G, 5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the terminal 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 of the terminal 100 is coupled to the mobile communication module 150, and the antenna 2 is coupled to the wireless communication module 160, so that the terminal 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite based augmentation systems, SBAS).

The terminal 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the terminal 100 may include one or N displays 194, where N is a positive integer greater than 1.

The terminal 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. An optical image of an object is generated by using the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to compress or decompress a digital video. The terminal 100 may support one or more video codecs. In this way, the terminal 100 may play or record videos in a plurality of coding formats, such as moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the terminal 100 may be implemented by using the NPU, for example, image recognition, facial recognition, speech recognition, and text understanding.

The external memory interface 120 may be used to connect to an external memory card such as a micro SD card, to extend a storage capability of the terminal 100. The external memory card communicates with the processor 110 by using the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to implement various function applications and data processing of the terminal 100. The internal memory 121 may include a program storage area and a data storage area. The program storage area may store an operating system, an application required by at least one function (for example, a voice playing function or an image playing function), and the like. The data storage area may store data (for example, audio data and a phone book) and the like created when the terminal 100 is used. In addition, the internal memory 121 may include a high-speed random access memory, or may include a nonvolatile memory, for example, at least one magnetic disk storage component, a flash memory, or a universal flash storage (universal flash storage, UFS).

The terminal 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal 100 may be used to listen to music or answer a call in a hands-free mode by using the speaker 170A.

The receiver 170B, also referred to as an "earpiece", is configured to convert an electrical audio signal into a sound signal. When a call is answered or speech information is received by the terminal 100, the receiver 170B may be put close to a human ear to listen to voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the terminal 100. In some other embodiments, two microphones 170C may be disposed in the terminal 100, to collect a sound signal and implement a noise reduction function. In some other embodiments, three, four, or more microphones 170C may alternatively be disposed in the terminal 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The terminal 100 determines pressure intensity based on a change in the capacitance. When a touch operation is performed on the display 194, the terminal 100 detects intensity of the touch operation by using the pressure sensor 180A. The terminal 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a short messaging service message application icon, an instruction for viewing a short messaging service message is performed. When a touch operation whose touch operation intensity is greater than or equal to the first pressure threshold is performed on the short messaging service message application icon, an instruction for creating a new short messaging service message is performed.

The gyro sensor 180B may be configured to determine a motion posture of the terminal 100. In some embodiments, an angular velocity of the terminal 100 around three axes (that is, axes x, y, and z) may be determined by using the gyro sensor 180B. The gyro sensor 180B may be configured to implement image stabilization during photographing. For example, when a shutter is pressed, the gyro sensor 180B detects an angle at which the terminal 100 jitters, calculates, based on the angle, a distance for which a lens module needs to compensate, and allows a lens to cancel the jitter of the terminal 100 through reverse motion, to implement the image stabilization. The gyro sensor 180B may also be used in a navigation scenario and a somatic game scenario.

The barometric pressure sensor 180C is configured to measure barometric pressure. In some embodiments, the terminal 100 calculates an altitude based on a barometric pressure value measured by the barometric pressure sensor 180C, to assist in positioning and navigation.

The magnetic sensor 180D includes a Hall sensor. The terminal 100 may detect opening and closing of a flip leather case by using the magnetic sensor 180D. In some embodiments, when the terminal 100 is a clamshell phone, the terminal 100 may detect opening and closing of a flip cover by using the magnetic sensor 180D. Further, a feature such as automatic unlocking of the flip cover is set based on a detected opening or closing state of the leather case or a detected opening or closing state of the flip cover.

The acceleration sensor 180E may detect magnitudes of accelerations of the terminal 100 in various directions (usually on three axes). A magnitude and a direction of gravity may be detected when the terminal 100 is still. The acceleration sensor 180E may be further configured to identify a posture of the electronic device, and is used in an application such as switching between a landscape mode and a portrait mode or a pedometer.

The distance sensor 180F is configured to measure a distance. The terminal 100 may measure a distance in an infrared manner or a laser manner. In some embodiments, in a photographing scenario, the terminal 100 may measure a distance by using the distance sensor 180F to implement quick focusing.

The optical proximity sensor 180G may include, for example, a light emitting diode (LED) and an optical detector, for example, a photodiode. The light emitting diode may be an infrared light emitting diode. The terminal 100 transmits infrared light by using the light-emitting diode. The terminal 100 detects infrared reflected light from a nearby object by using the photodiode. When sufficient reflected light is detected, it may be determined that there is an object near the terminal 100. When insufficient reflected light is detected, the terminal 100 may determine that there is no object near the terminal 100. The terminal 100 may detect, by using the optical proximity sensor 180G, that the user holds the terminal 100 to approach an ear for a call, to automatically turn off a screen to save power. The optical proximity sensor 180G may also be used in a smart cover mode or a pocket mode to automatically perform screen unlocking or locking.

The ambient light sensor 180L is configured to sense ambient light brightness. The terminal 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the terminal 100 is in a pocket, to avoid an accidental touch.

The fingerprint sensor 180H is configured to collect a fingerprint. The terminal 100 may use a feature of the collected fingerprint to implement fingerprint-based unlocking, application lock access, fingerprint-based photographing, fingerprint-based call answering, and the like.

The temperature sensor 180J is configured to detect temperature. In some embodiments, the terminal 100 executes a temperature processing policy by using the temperature detected by the temperature sensor 180J. For example, when the temperature reported by the temperature sensor 180J exceeds a threshold, the terminal 100 lowers performance of a processor located near the temperature sensor 180J, to reduce power consumption for thermal protection. In some other embodiments, when the temperature is lower than another threshold, the terminal 100 heats the battery 142 to avoid abnormal shutdown of the terminal 100 due to low temperature. In some other embodiments, when the temperature is lower than still another threshold, the terminal 100 boosts an output voltage of the battery 142 to avoid abnormal shutdown caused by low temperature.

The touch sensor 180K is also referred to as a "touch panel". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of a touch event. A visual output related to the touch operation may be provided by using the display 194. In some other embodiments, the touch sensor 180K may alternatively be disposed on a surface of the terminal 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive a button input, and generate a button signal input related to user setting and function control of the terminal 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The terminal 100 interacts with a network by using the SIM card, to implement functions such as calling and data communication. In some embodiments, the terminal 100 uses an eSIM, namely, an embedded SIM card. The eSIM card may be embedded in the terminal 100, and cannot be separated from the terminal 100.

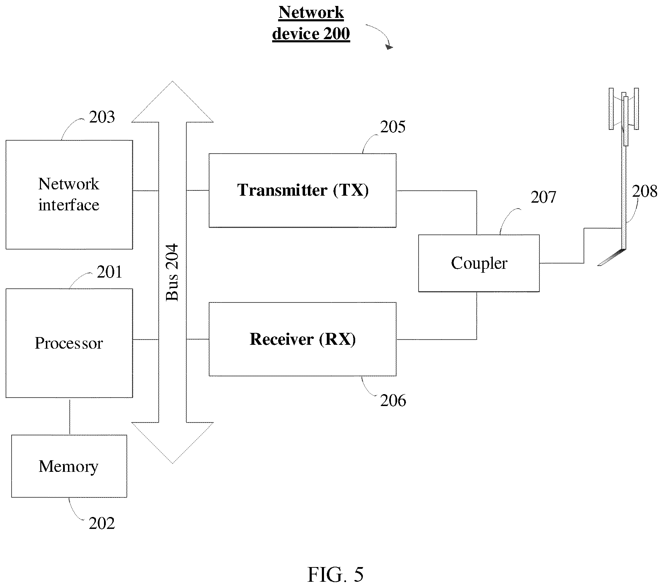

FIG. 5 is a schematic diagram of a structure of a network device 200 according to an embodiment of this application.

As shown in FIG. 5, the network device 200 may include one or more processors 201, a memory 202, a network interface 203, a transmitter 205, a receiver 206, a coupler 207, and an antenna 208. The components may be connected by using a bus 204 or in another manner, and in FIG. 5, a bus connection is used as an example.

The network interface 203 may be used by the network device 200 to communicate with another communication device (such as another network device).

The transmitter 205 may be configured to perform transmission processing such as signal modulation on a signal output by the processor 201. The receiver 206 may be configured to perform reception processing such as signal demodulation on a mobile communication signal received by the antenna 208. In some embodiments of this application, there may be one or more transmitters 205 and receivers 206. The antenna 208 may be configured to convert electromagnetic energy in a transmission line into an electromagnetic wave in free space, or convert an electromagnetic wave in the free space into electromagnetic energy in the transmission line. The coupler 207 may be configured to divide a mobile communication signal into a plurality of signals and allocate the plurality of signals to a plurality of receivers 206.

The memory 202 may be coupled to the processor 201 by using the bus 204 or an input/output port, or the memory 202 may be integrated with the processor 201. The memory 302 is configured to store various software programs and/or a plurality of groups of instructions. Specifically, the memory 202 may include a high-speed random access memory, or a non-volatile memory, for example, one or more disk storage devices, a flash memory component, or another non-volatile solid-state storage device. The memory 202 may store an operating system, for example, an embedded operating system such as uCOS, VxWorks, or RTLinux. The memory 202 may further store a network communication program, and the network communication program may be configured to communicate with one or more additional devices, one or more terminals, and one or more network devices.

**EP 4 210 400 A1**

In this embodiment of this application, the processor 201 may be configured to read and execute computer-readable instructions. Specifically, the processor 301 may be configured to invoke a program stored in the memory 202, for example, a program for implementing, on a side of the network device 200, a data transmission method provided in one or more embodiments of this application, and execute an instruction included in the program.

It should be noted that the network device 200 shown in FIG. 5 is merely an implementation of embodiments of this application, and in actual application, the network device 200 may further include more or fewer components. This is not limited herein.

An uplink power control method provided in an embodiment of this application is described below.

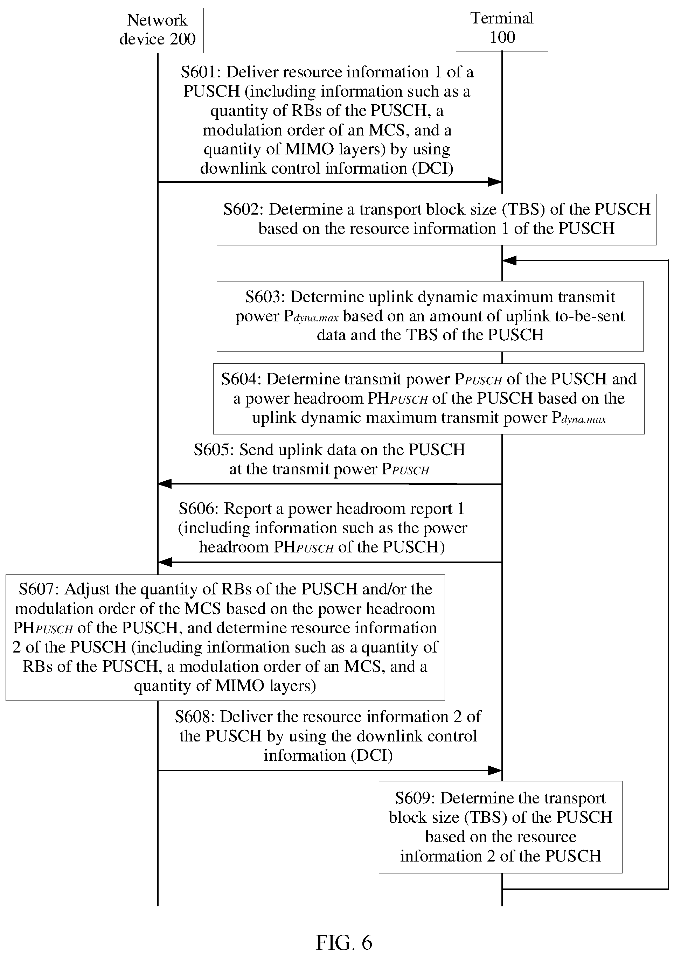

FIG. 6 shows an uplink power control method according to an embodiment of this application. The method may be applied to a communication network system including a network device 200 and a terminal 100.

As shown in FIG. 6, the method includes the following steps.

S601: The network device 200 delivers resource information 1 of a PUSCH to the terminal 100 by using downlink control information (down control information, DCI). The resource information 1 includes information such as a quantity of resource blocks (resource block, RB) of the PUSCH, a modulation order of a modulation and coding scheme (modulation coding scheme, MCS), and a quantity of multiple-input multiple-output (multiple-input and multiple-output, MIMO) layers.

Specifically, in a 5G NR communication system, the network device 200 may deliver the resource information 1 of the PUSCH to the terminal 100 by using a DCI format (format) 0_0 and a DCI format 0_1 that are carried on a physical downlink control channel (physical downlink control channel, PDCCH). In another communication system such as LTE, the network device 200 may send the resource information 1 to the terminal 100 by using another DCI format carried on the PDCCH.

The network device 200 may periodically pre-schedule a resource on the PUSCH for the terminal 100, and deliver the resource information 1 of the PUSCH to the terminal 100 by using DCI carried on the PDCCH.

In this embodiment of this application, the resource information 1 may be referred to as first resource information.

S602: After receiving the resource information 1 of the PUSCH, the terminal 100 determines a transport block size (transport block size, TBS) of the PUSCH based on the resource information 1 of the PUSCH.

The terminal 100 may determine a code rate of the MCS based on the modulation order of the MCS in the resource information 1. The terminal 100 may determine a quantity of information bits of a transport block of the PUSCH based on the quantity of RBs of the PUSCH, the modulation order of the MCS, the quantity of MIMO layers, and the code rate of the MCS in the resource information 1 of the PUSCH. Then, the terminal 100 may quantize the quantity of information bits of the transport block of the PUSCH, to obtain the transport block size (TBS) of the PUSCH.

For a method for calculating the transport block size (TBS) of the PUSCH, refer to content in section 38.214 in chapter 6.1.4.2 of a protocol of the release 15.60. Details are not described herein again.

S603: The terminal 100 determines uplink dynamic maximum transmit power $P_{dyna.max}$ based on to-be-sent uplink data and the TBS of the PUSCH.

The terminal 100 stores an amount of the to-be-sent uplink data in a buffer at a layer 2 (that is, a data link layer) of the terminal 100. The terminal 100 may dynamically adjust maximum uplink transmit power based on the amount of the to-be-sent uplink data buffered in the buffer at the layer 2 and the TBS of the PUSCH, to determine the uplink dynamic maximum transmit power $P_{dyna.max}$

For example, most applications on the terminal 100 are mainly downlink services, and an amount of uplink data is relatively small. For example, when the terminal 100 starts a browser application to browse web page data, or starts a video application to watch a network video, a TBS of a PUSCH scheduled by the network device 200 is greater than an amount of to-be-sent uplink data of the terminal 100. In this case, the terminal 100 may decrease the maximum transmit power. For another example, when the terminal 100 starts a video call, or synchronizes a local file or photo of the terminal 100 to cloud storage space on a server, an amount of uplink data of the terminal 100 is large, and the TBS of the PUSCH scheduled by the network device 200 is less than the amount of the to-be-sent uplink data of the terminal 100. In this case, the terminal 100 may increase the maximum transmit power.

When the TBS scheduled by the network device 200 for the terminal 100 is greater than the amount of the to-be-sent uplink data of the terminal 100, after sending the to-be-sent uplink data on a TB, the terminal 100 further needs to send padding bit data in a remaining part of the TB, that is, send bit data whose bit values are all 0s in the remaining part of the TB. When the terminal 100 has a large amount of uplink data to be sent, the TBS scheduled by the network device 200 for the terminal 100 is less than the amount of the to-be-sent uplink data, and all data transmitted on the TB is valid data. In this case, a proportion of padding bits on the TB to the entire TB is extremely low, and is close to 0. When the terminal 100 has only a small amount of data or even no data to be sent, padding bits are mainly transmitted on the TB, and a proportion of the padding bits to the entire TB is extremely high or even close to 100%.

In this embodiment of this application, the terminal 100 may determine the uplink dynamic maximum transmit power $P_{dyna.max}$ in the following manners.

Manner 1:

The terminal 100 may determine the uplink dynamic maximum transmit power $P_{dyna.max}$ based on a proportion of padding bits in the TB on the PUSCH to the entire TB.

The proportion $R_{padding}$ of the padding bits in the TB on the PUSCH to the entire TB may be determined by using the following formula (1):

$$R_{padding} = Quantity\ of\ padding\ bits\ in\ the\ PUSCH/TBS \quad \text{Formula (1)}$$

When $R_{padding}$ is less than or equal to a first proportion threshold (for example, 10%), the terminal 100 may increase the uplink dynamic maximum transmit power. When $R_{padding}$ is greater than a second proportion threshold (for example, 50%), it indicates that the TBS currently scheduled by the network device 200 for the terminal 100 is greater than a data sending requirement of the terminal 100, and the terminal 100 may decrease the uplink dynamic maximum transmit power. The first proportion threshold is less than or equal to the second proportion threshold, and an initial value of the uplink dynamic maximum transmit power $P_{dyna.max}$ may be maximum transmit power $P_{CMAX}$ configured on the terminal 100, and $P_{CMAX}$ is maximum transmit power configured for the terminal 100 in a communication protocol, and is related to a power level of the terminal 100.

In a possible implementation, the terminal 100 may use a policy of quick increase and slow decrease when adjusting the maximum transmit power, to avoid the following problem: The network device 200 slowly adjusts the quantity of RBs and the modulation order of the MCS when the terminal decreases the maximum transmit power; consequently, a high bit error rate is caused when the terminal 100 sends the uplink data.

In specific implementation, the terminal 100 may calculate a proportion $R_{padding}$ of padding bit data in the TB on the PUSCH. The terminal 100 may obtain a previous moment $TTI_{last}$ at which the uplink dynamic maximum transmit power is adjusted, uplink dynamic maximum transmit power $P_{last.max}$ obtained after the previous adjustment, a current moment $TTI_{current}$, a period $TTI_{period.reduced}$ of reducing the uplink dynamic maximum transmit power, and an uplink block error rate (block error rate, BLER) from the previous moment at which the uplink dynamic maximum transmit power is adjusted to the current moment $TTI_{current}$.

In a possible implementation, the proportion $R_{padding}$ of the padding bit data in the TB on the PUSCH calculated by the terminal 100 may be a value obtained after alpha (alpha) filtering. A specific filtering process may be shown in the following formula (2):

$$R_{padding}(n) = a * R_{padding}(n-1) + (1-a) * R_{padding} \quad \text{Formula (2)}$$

$R_{padding}$ (n) represents a filtering result of a proportion of padding bit data in the TB on the PUSCH that is calculated at an $n^{th}$ time, $R_{padding}$ represents the proportion of the padding bit data in the TB on the PUSCH calculated that is at the $n^{th}$ time, and $R_{padding}$ (n - 1) represents a filtering result of a proportion of padding bit data in the TB on the PUSCH that is calculated at an $(n-1)^{th}$ time, and $a$ is a filtering coefficient whose value range is [0, 1], and represents a proportion of the filtering result of the proportion of the padding bit data in the TB on the PUSCH at the $(n-1)^{th}$ time in a process of calculating the filtering result of the proportion of the padding bit data in the TB on the PUSCH at the $n^{th}$ time.

When the terminal 100 determines that the TBS is less than a threshold $Th_{TBS}$ or $R_{padding}$ is less than the first proportion threshold $R_{padding.up1}$, the terminal 100 may calculate the uplink dynamic maximum transmit power $P_{dyna.max}$ by using the following formula (3):

$$P_{dyna.max} = P_{last.max} + max\{10\log_{10}(2^{\mu} \cdot B_{RLC}/TBS), 0\} \quad \text{Formula (3)}$$

$B_{RLC}$ is a current amount of to-be-sent uplink data of the terminal 100, that is, a current amount of bit (bit) data in a buffer at a radio link control layer (radio link control, RLC) of the terminal 100, and the current amount of the to-be-sent uplink data includes a data amount of retransmitted bits at the RLC.

When the terminal 100 adjusts the maximum transmit power for the first time, $P_{last.max}=P_{CMAX}$, where $P_{CMAX}$ is represented by a dB value of the maximum transmit power configured on the terminal 100.

$\mu$ is used to represent a subcarrier spacing (subcarrier spacing, SCS). In a 5G NR network, there are five optional subcarrier spacings: 15 kHz (kHz), 30 kHz, 60 kHz, 120 kHz, and 240 kHz. There is only one type of subcarrier spacing in an LTE network: 15 kHz. When the subcarrier spacing is 15 kHz (kHz), a corresponding value of $\mu$ is 0; when the subcarrier spacing is 30 kHz, a corresponding value of $\mu$ is 1; when the subcarrier spacing is 60 kHz, a corresponding value of $\mu$ is 2; when the subcarrier spacing is 120 kHz, a corresponding value of $\mu$ is 3; or when the subcarrier spacing is 120 kHz, a corresponding value of $\mu$ is 4.

In a possible implementation, when a TB size corresponding to the first resource information (that is, the resource information 1) is less than the amount of the to-be-sent uplink data, the terminal 100 may determine second uplink dynamic maximum transmit power of the PUSCH by using the foregoing formula (3).

When the terminal 100 determines that $R_{padding}$ is greater than the second proportion threshold $R_{padding.down1}$, $TTI_{current}$ - $TTI_{last}$ > $TTI_{period.reduced}$, the BLER is less than a block error rate threshold $BLER_{THresh}$, and a path loss (path loss, PL) estimated by the current terminal 100 is less than a path loss threshold $PL_{THresh}$, the terminal 100 may calculate the uplink dynamic maximum transmit power $P_{dyna.max}$ by using the following formula (4):

$$P_{dyna.max} = \begin{cases} P_{last.max} - \Delta_{step}, P_{last.max} - \Delta_{step} > P_{dyna.min} \\ P_{dyna.min}, P_{last.max} - \Delta_{step} \leq P_{dyna.min} \end{cases} \quad \text{Formula (4)}$$

$\Delta_{step}$ is a preset power value, and $P_{dyna.min}$ is a minimum threshold of the dynamic maximum transmit power. When the terminal 100 adjusts the maximum transmit power for the first time, $P_{last.max}=P_{CMAX}$, where $P_{CMAX}$ is represented by a dB value of the maximum transmit power configured on the terminal 100 in the communication protocol.

In a possible implementation, when the terminal 100 determines that $R_{padding}$ is greater than the second proportion threshold $R_{padding.down1}$, the terminal 100 may calculate the uplink dynamic maximum transmit power $P_{dyna.max}$ by using the foregoing formula (4).

In a possible implementation, when the terminal 100 determines that $R_{padding}$ is greater than the second proportion threshold $R_{padding.down1}$, and $TTI_{current}$ - $TTI_{last}$ > $TTI_{period}$, the terminal 100 may calculate the uplink dynamic maximum transmit power $P_{dyna.max}$ by using the foregoing formula (4).

In a possible implementation, when the terminal 100 determines that $R_{padding}$ is greater than the second proportion threshold $R_{padding.down1}$ and the BLER is less than the block error rate threshold $BLER_{THresh}$, the terminal 100 may calculate the uplink dynamic maximum transmit power $P_{dyna.max}$ by using the foregoing formula (4).

In a possible implementation, when the TB size corresponding to the first resource information (that is, the resource information 1) is greater than the amount of the to-be-sent uplink data, the first uplink dynamic maximum transmit power of the PUSCH is determined by using the foregoing formula (4).

In this way, the terminal 100 may dynamically set the maximum transmit power of the terminal 100 based on the TBS of the PUSCH scheduled by the current network device 200 for the terminal 100 and the amount of the to-be-sent uplink data (an amount of data in the layer-2 buffer, including retransmitted data). When the proportion of the padding bit data in the TB is high, the terminal 100 decreases the maximum transmit power, and feeds back the maximum transmit power to the network device 200 by using a PHR, so that when scheduling the PUSCH for the terminal 100 next time, the network device 200 reduces a quantity of RBs of the PUSCH and/or a modulation order of an MCS, to decrease transmit power of the terminal 100 and reduce power consumption of the terminal 100. When the proportion of the padding bit data in the TB is low, the terminal 100 increases the maximum transmit power, and feeds back the maximum transmit power to the network device 200 by using a PHR, so that when scheduling the PUSCH for the terminal 100 next time, the network device 200 increases a quantity of RBs of the PUSCH and/or a modulation order of an MCS, to ensure that a normal service data sending delay of the terminal 100 is not affected. Further, the terminal 100 may further set a bit error rate threshold. When an uplink bit error rate is greater than the bit error rate threshold, the terminal 100 does not decrease the maximum transmit power, to ensure uplink delay performance. The terminal 100 may further set a path loss threshold. When a path loss is greater than the path loss threshold, the terminal 100 does not decrease the maximum transmit power, to ensure uplink delay performance of the terminal 100 at a cell edge.

Manner 2:

The terminal 100 may determine the uplink dynamic maximum transmit power $P_{dyna.max}$ based on a proportion of TBs that are all padding bit data in a plurality of TBs of the PUSCH scheduled by the network device 200 for the terminal 100 in a specified time period (for example, one adjustment period of the maximum transmit power).

The period of adjusting the maximum transmit power is $TTI_{period}$. The terminal 100 may count the proportion $R_{padding.all}$ of the TBs that are all padding bit data to the plurality of TBs of the PUSCH scheduled by the network device 200 for the terminal 100 in the period $TTI_{period}$.

When $R_{padding.all}$ is less than or equal to a third proportion threshold (for example, 10%), the terminal 100 may increase the uplink dynamic maximum transmit power. When $R_{padding.all}$ is greater than a fourth proportion threshold (for example, 50%), the terminal 100 may decrease the uplink dynamic maximum transmit power. The third proportion threshold is less than or equal to the fourth proportion threshold, an initial value of the uplink dynamic maximum transmit power $P_{dyna.max}$ is maximum transmit power $P_{CMAX}$ configured on the terminal 100, and $P_{CMAX}$ is maximum transmit power configured for the terminal 100 in the communication protocol, and is related to a power level of the terminal 100.

In a possible implementation, the terminal 100 may use a policy of quick increase and slow decrease when adjusting the maximum transmit power, to avoid the following problem: The network device 200 slowly adjusts the quantity of RBs and the modulation order of the MCS when the terminal decreases the maximum transmit power; consequently, a high bit error rate is caused when the terminal 100 sends the uplink data.

In a specific implementation, the terminal 100 may count the proportion $R_{padding.all}$ of the TBs that are all padding bit data to the plurality of TBs of the PUSCH scheduled by the network device 200 for the terminal 100 in the period $TTI_{period}$, and perform alpha (alpha) filtering on $R_{padding.all}$. The terminal 100 may obtain uplink dynamic maximum transmit power $P_{last.max}$ obtained after previous adjustment. For a specific filtering process, refer to a filtering process shown in the foregoing formula (2). Details are not described herein again.

When the terminal 100 determines that the TBS is less than a threshold $Th_{TBS}$ or $R_{padding.all}$ is less than the first proportion threshold $R_{padding.up2}$, the terminal 100 may calculate the uplink dynamic maximum transmit power $P_{dyna.max}$ by using the foregoing formula (3).

When the terminal 100 determines that $R_{padding.reduced}$ is greater than the second proportion threshold $R_{padding.down1}$, the terminal 100 may calculate the uplink dynamic maximum transmit power $P_{dyna.max}$ by using the foregoing formula (4).

In this way, the terminal 100 may dynamically set the maximum transmit power of the terminal 100 based on the TBS of the PUSCH scheduled by the current network device 200 for the terminal 100 and the amount of the to-be-sent uplink data (an amount of data in the layer-2 buffer, including retransmitted data). When the proportion of the TBs that are all padding bit data is high in a specified time period, the terminal 100 decreases the maximum transmit power, and feeds back the maximum transmit power to the network device 200 by using a PHR, so that when scheduling the PUSCH for the terminal 100 next time, the network device 200 reduces the quantity of RBs of the PUSCH and/or the modulation order of the MCS, to decrease the transmit power of the terminal 100 and reduce power consumption of the terminal 100. When the proportion of the TBs that are all padding bit data is low in the specified time period, the terminal 100 increases the maximum transmit power, and feeds back the maximum transmit power to the network device 200 by using a PHR, so that when scheduling the PUSCH for the terminal 100 next time, the network device 200 increases the quantity of RBs of the PUSCH and/or the modulation order of the MCS, to ensure that a normal service data sending delay of the terminal 100 is not affected.

S604: The terminal 100 determines transmit power $P_{PUSCH}$ of the PUSCH and a power headroom $PH_{PUSCH}$ of the PUSCH based on the uplink dynamic maximum transmit power $P_{dyna.max}$.

The terminal 100 may calculate the transmit power $P_{PUSCH}$ of the PUSCH based on the uplink dynamic maximum transmit power $P_{dyna.max}$ by using the following formula (5).

$$P_{PUSCH} = min \begin{cases} P_{dyna,max} \\ P_{CMAX} \\ P_{0\_PUSCH} + 10\log_{10}(2^{\mu} \cdot M_{RB}^{PUSCH}) + \alpha \cdot PL + \Delta_{TF} + f \end{cases} \text{[dBm] Formula (5)}$$

$P_{CMAX}$ is the maximum transmit power configured for the terminal 100 in the communication protocol, and is related to the power level of the terminal 100.

$P_{0\_PUSCH}$ is reference power density, may also be referred to as nominal power, and may be used to represent power density of a signal that is sent by the terminal 100 on the PUSCH and that the network device 200 expects to receive. The power density is density of power in frequency domain.

$\mu$ is used to indicate a subcarrier spacing. In the 5G NR network, there are five optional subcarrier spacings: 15 kHz (kHz), 30 kHz, 60 kHz, 120 kHz, and 240 kHz. There is only one type of subcarrier spacing in the LTE network: 15 kHz. When the subcarrier spacing is 15 kHz (kHz), a corresponding value of $\mu$ is 0; when the subcarrier spacing is 30 kHz, a corresponding value of $\mu$ is 1; when the subcarrier spacing is 60 kHz, a corresponding value of $\mu$ is 2; when the subcarrier spacing is 120 kHz, a corresponding value of $\mu$ is 3; or when the subcarrier spacing is 120 kHz, a corresponding value of $\mu$ is 4.

$M_{RB}^{PUSCH}$ represents the quantity of RBs of the PUSCH.

$\alpha$ is a path loss compensation factor. Optionally, a value of $\alpha$ may be discrete values in [0, 1], for example, 0, 0.4, 0.5, 0.6, 0.7, 0.8, 0.9, or 1. $\alpha$ may be used to adjust path loss compensation, and therefore is usually presented as a multiplication coefficient of the path loss PL. By using the coefficient $\alpha$, the network device 200 may control a degree to which the terminal 100 compensates for the path loss. For example, when the terminal 100 is located at a near point of the network device 200, a channel condition is usually relatively good. The network device 200 may configure $\alpha$ that is less than 1 for the terminal 100, to suppress interference caused by the terminal 100 at the near point to a signal sent by another terminal at a far point.

PL represents the path loss, and is used to compensate for a path loss in signal transmission. Optionally, the path loss may be considered as a path loss in a broad sense, may be understood as a path loss, a coupling loss, or the like, and is used to represent a large-scale loss experienced when a signal is transmitted on a link between the network device 200 and the terminal 100. For example, in the LTE system, the terminal 100 may receive a cell reference signal (cell reference signal, CRS), measure receive power of the CRS, and subtract receive power obtained after higher layer filtering from network device-side transmit power configured by the network device 200 for the terminal 100, to obtain the PL.

$\Delta_{TF}$ is a transmit power adjustment item related to a transmission format, and may be used to indicate a power offset value related to a modulation and coding scheme and signal content (for example, whether there is uplink control information UCI and a size of the uplink control information). Optionally, when the terminal 100 performs transmission at a high code rate, a higher value of $\Delta_{TF}$ is correspondingly obtained, and transmit power is increased, to ensure signal quality during transmission at the high code rate, and prevent deterioration of signal demodulation performance caused by transmission at the high code rate.

$f$ indicates a power control accumulation of the PUSCH.

The terminal 100 may calculate the power headroom $PH_{PUSCH}$ of the PUSCH based on the uplink dynamic maximum transmit power $P_{dyna.max}$ by using the following formula (6).

$$PH_{PUSCH} = min\{P_{dyna,max}, P_{CMAX}\} - \{P_{0\_PUSCH} + 10\log_{10}(2^{\mu} \cdot M_{RB}^{PUSCH}) + \alpha \cdot PL + \Delta_{TF} + f\} \quad [dB]$$

Formula (6)

For text descriptions of parameters $P_{CMAX}$, $P_{0\_PUSCH}$, $\mu$, $M_{RB}^{PUSCH}$, $\alpha$, PL, $\Delta_{TF}$, and $f$ in Formula (6), refer to the foregoing formula (5). Details are not described herein again.

S605: The terminal 100 sends the uplink data to the network device 200 on the PUSCH at the transmit power $P_{PUSCH}$.

When the amount of the to-be-sent uplink data buffered at the RLC layer of the terminal 100 is 0, the terminal 100 may pad padding bit data in all TBs on the PUSCH, and send the padding bit data to the network device 200 at the transmit power $P_{PUSCH}$. In other words, the uplink data sent by the terminal 100 to the network device 200 on the PUSCH is all padding bit data.

When the amount of the to-be-sent uplink data buffered at the RLC layer of the terminal 100 is less than the TBS, the terminal 100 may pad the to-be-sent uplink data buffered at the RLC layer into the TB on the PUSCH, pad padding bit data into a remaining part of the TB, and send the padding bit data to the network device 200 by using the transmit power $P_{PUSCH}$. In other words, the uplink data sent by the terminal 100 to the network device 200 on the PUSCH includes the to-be-sent uplink data buffered at the RLC layer and the padding bit data.

When the amount of the to-be-sent uplink data of the terminal 100 is equal to the TBS, the terminal 100 may pad all the to-be-sent uplink data buffered at the RLC layer into the TB on the PUSCH. In other words, the uplink data sent by the terminal 100 to the network device 200 on the PUSCH includes the to-be-sent uplink data buffered at the RLC layer.

When the amount of the to-be-sent uplink data of the terminal 100 is greater than the TBS, the terminal 100 may pad a first part of data in the to-be-sent uplink data buffered at the RLC layer into the TB on the PUSCH, and send the data to the network device 200 at the transmit power $P_{PUSCH}$. In other words, the uplink data sent by the terminal 100 to the network device 200 on the PUSCH includes the first part of data in the to-be-sent uplink data buffered at the RLC layer. A data amount of the first part of data is less than the data amount of the to-be-sent uplink data, and the data amount of the first part of data is the same as the TBS.

S606: The terminal 100 reports a power headroom report 1 to the network device 200. The power headroom report 1 includes information such as the power headroom of the PUSCH.

The terminal 100 may send the power headroom report (PHR) 1 and the uplink data together in the TB of the PUSCH to the network device 200.

S607: After receiving the power headroom report 1, the network device 200 may adjust a quantity of RBs the PUSCH and/or a modulation order of an MCS based on the power headroom $PH_{PUSCH}$ of the PUSCH, to determine resource information 2 of the PUSCH. The resource information 2 of the PUSCH includes information such as a quantity of RBs of the PUSCH, a modulation order of an MCS, and a quantity of MIMO layers.

Specifically, after receiving the power headroom report 1, the network device 200 may obtain the power headroom $PH_{PUSCH}$ of the PUSCH from the power headroom report 1. $PH_{PUSCH}$ may be used to indicate a value of a power headroom that can be used by the terminal 100 relative to the transmit power of the signal currently sent by the terminal 100 on the PUSCH.

When $PH_{PUSCH}>0$, it indicates that the transmit power at which the terminal 100 to send a signal on the PUSCH is not used up. When scheduling a PUSCH resource for the terminal 100 next time, the network device 200 may increase a quantity of RBs of the PUSCH and/or a modulation order of an MCS, to schedule a larger TB on the PUSCH for the terminal 100. Larger $PH_{PUSCH}$ indicates that the network device 200 may increase the quantity of RBs of the PUSCH and/or the modulation order of the MCS to larger values. Therefore, when $PH_{PUSCH}>0$, the quantity of RBs of the PUSCH in the resource information 2 is greater than the quantity of RBs of the PUSCH in the resource information 1, and/or the modulation order of the MCS in the resource information 2 is greater than the modulation order of the MCS in the resource information 1.

When $PH_{PUSCH}<0$, it indicates that the transmit power required by the terminal 100 to send a signal on the PUSCH exceeds the maximum transmit power $\min\{P_{dyna,max}, P_{CMAX}\}$ configured for the terminal 100. When scheduling a PUSCH resource for the terminal 100 next time, the network device 200 may reduce the quantity of RBs of the PUSCH and/or the modulation order of the MCS, and schedule a smaller TB on the PUSCH for the terminal 100. Smaller $PH_{PUSCH}$ indicates that the network device 200 needs to reduce the quantity of RBs of the PUSCH and/or the modulation order of the MCS to smaller values. Therefore, when $PH_{PUSCH}<0$, the quantity of RBs of the PUSCH in the resource information 2 is less than the quantity of RBs of the PUSCH in the resource information 1, and/or the modulation order of the MCS in the resource information 2 is less than the modulation order of the MCS in the resource information 1.

When $PH_{PUSCH}=0$, it indicates that the transmit power required by the terminal 100 to send a signal on the PUSCH is the same as the maximum transmit power $\min\{P_{dyna,max}, P_{CMAX}\}$ configured for the terminal 100. When scheduling a PUSCH resource for the terminal 100 next time, the network device 200 may not change the quantity of RBs of the PUSCH and/or the modulation order of the MCS, and does not change a TB size scheduled for the terminal 100. Therefore, when $PH_{PUSCH}=0$, the quantity of RBs of the PUSCH in the resource information 2 is equal to the quantity of RBs of the PUSCH in the resource information 1, and the modulation order of the MCS in the resource information 2 is equal to the modulation order of the MCS in the resource information 1.

The terminal 100 may report a first power headroom of the PUSCH to the network device 200 when the transport block TB size corresponding to the first resource information (that is, the resource information 1) is equal to the data amount of the to-be-sent uplink data in the buffer at the RLC layer.

When the TB size corresponding to the first resource information (that is, the resource information 1) is greater than the data amount of the to-be-sent uplink data, the terminal 100 reports a second power headroom of the PUSCH to the network device 200. The second power headroom is less than the first power headroom. The network device 200 may deliver second resource information to the terminal 100 based on the second power headroom of the PUSCH by using the DCI carried on the PDCCH, and the second resource information is different from the first resource information.

When the second power headroom is greater than 0, a quantity of resource blocks RBs of the PUSCH in the second resource information is greater than the quantity of RBs of the PUSCH in the first resource information, and/or a modulation order of a modulation and coding scheme MCS in the second resource information is greater than the modulation order of the MCS in the first resource information. When the second power headroom is less than 0, the quantity of resource blocks RBs of the PUSCH in the second resource information is less than the quantity of RBs of the PUSCH in the first resource information, and/or the modulation order of the MCS in the second resource information is less than the modulation order of the MCS in the first resource information. When the second power headroom is equal to 0, the quantity of resource blocks RBs of the PUSCH in the second resource information is equal to the quantity of RBs of the PUSCH in the first resource information, and the modulation order of the MCS in the second resource information is the same as the modulation order of the MCS in the first resource information.

When the TB size corresponding to the first resource information (that is, the resource information 1) is less than the data amount of the to-be-sent uplink data, the terminal 100 may report a third power headroom of the PUSCH to the network device 200. The third power headroom is greater than the first power headroom. The network device 200 may deliver third resource information to the terminal 100 based on the third power headroom of the PUSCH by using the DCI carried on the PDCCH, and the third resource information is different from the first resource information.

S608: The network device 200 delivers resource information 2 of the PUSCH to the terminal 100 by using the downlink control information (DCI).

Specifically, in the 5G NR communication system, the network device 200 may deliver the resource information 2 of the PUSCH to the terminal 100 by using a DCI format 0_0 and a DCI format 0_1 that are carried on the PDCCH. In another communication system such as LTE, the network device 200 may send the resource information 2 to the terminal 100 by using another DCI format carried on the PDCCH.

S609: The terminal 100 determines a transport block size (TBS) of the PUSCH based on the resource information 2 of the PUSCH.

The terminal 100 may determine a code rate of the MCS based on the modulation order of the MCS in the resource information 2. The terminal 100 may determine a quantity of information bits of a transport block of the PUSCH based on the quantity of RBs of the PUSCH, the modulation order of the MCS, a quantity of MIMO layers, and the code rate of the MCS in the resource information 2 of the PUSCH. Then, the terminal 100 may quantize the quantity of information bits of the transport block of the PUSCH, to obtain the transport block size (TBS) of the PUSCH.

For a method for calculating the transport block size (TBS) of the PUSCH, refer to content in section 38.214 in chapter 6.1.4.2 of a protocol of a release 15.60. Details are not described herein again.

After the transport block size of the PUSCH is determined based on the resource information 2 of the PUSCH, the method may return to the foregoing steps S603 to S608.

This embodiment of this application provides an uplink power control method. The network device may periodically pre-schedule the PUSCH for the terminal, and the terminal may dynamically adjust the maximum transmit power based on the transport block (transport block, TB) size in the PUSCH scheduled by the network device and the amount of the to-be-sent uplink data. When the amount of the to-be-sent uplink data is far less than the TB size scheduled by the network device, the terminal may decrease the maximum transmit power, and report the maximum transmit power to the network device by using a power headroom report (power headroom report, PHR), so that the network device reduces the TB size and uplink transmit power of the terminal by reducing the quantity of resource blocks and/or the modulation order of the MCS. In this way, power consumption of the terminal is reduced while a delay of sending the uplink data by the terminal is reduced.

An uplink power control method according to another embodiment of this application is described below.

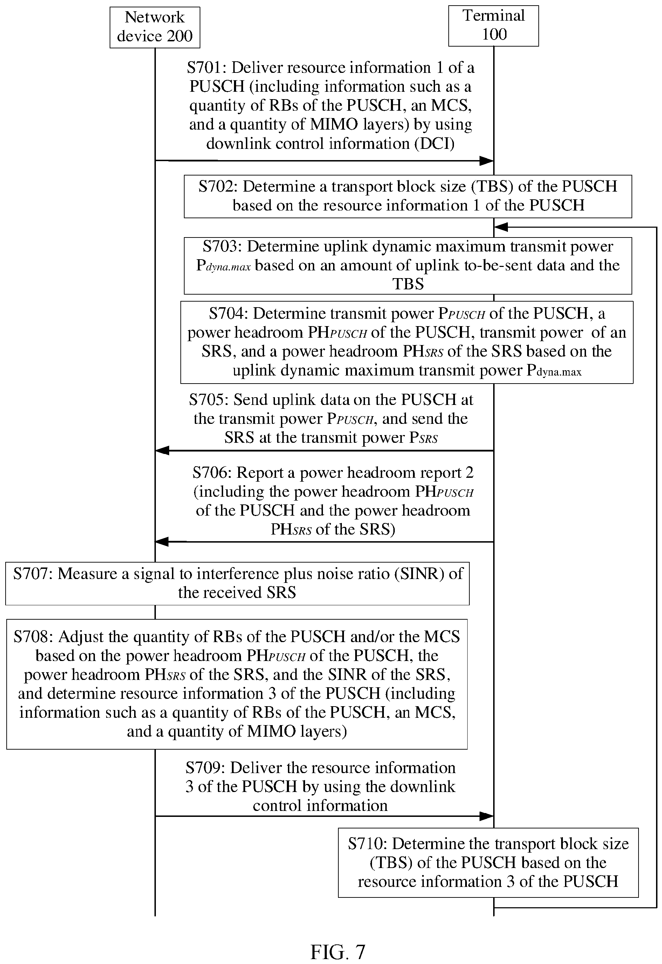

FIG. 7 shows an uplink power control method according to another embodiment of this application. The method may be applied to a communication network system including a network device 200 and a terminal 100.

As shown in FIG. 7, the method includes the following steps.

S701: The network device 200 delivers resource information 1 of a PUSCH to the terminal 100 by using downlink control information (DCI). The resource information 1 includes a quantity of RBs of the PUSCH and a modulation order of an MCS.

For specific content, refer to step S601 in the embodiment shown in FIG. 6. Details are not described herein again.

S702: After receiving the resource information 1 of the PUSCH, the terminal 100 determines a transport block size (TBS) of the PUSCH based on the resource information 1 of the PUSCH.

For specific content, refer to step S602 in the embodiment shown in FIG. 6. Details are not described herein again.

S703: The terminal 100 determines uplink dynamic maximum transmit power $P_{dyna.max}$ based on an amount of to-be-sent uplink data and the TBS.

For specific content, refer to step S603 in the embodiment shown in FIG. 6. Details are not described herein again.

S704: The terminal 100 determines transmit power $P_{PUSCH}$ of the PUSCH, a power headroom $PH_{PUSCH}$ of the PUSCH, transmit power $P_{SRS}$ of an SRS, and a power headroom $PH_{SRS}$ of the SRS based on the uplink dynamic maximum transmit power $P_{dyna.max}$.

For determining, by the terminal 100, the transmit power $P_{PUSCH}$ of the PUSCH and the power headroom $PH_{PUSCH}$ of the PUSCH based on the uplink dynamic maximum transmit power, refer to step S604 in the embodiment in FIG. 6. Details are not described herein again.

The sounding reference signal (sounding reference signal, SRS) may be used to perform channel quality detection and estimation, beam management, and the like. The terminal 100 may configure one or more SRS resource sets according to a higher-layer parameter instruction. Each resource set includes at least one SRS resource (including a quantity of RBs of the SRS (that is, bandwidth of the SRS) and the like). A specific quantity of SRS resources included in each resource set is related to a processing capability of the terminal 100.

The SRS may be configured to be periodically sent by the terminal 100 to the network device 200. Alternatively, the SRS may be sent aperiodically. The network device 200 may trigger, by using the downlink control information (DCI), the terminal 100 to send an aperiodic SRS. At least one status indication bit in the DCI is used to indicate the terminal 100 to select one of one or more configured SRS resource sets.

The terminal 100 may calculate the transmit power $P_{SRS}$ of the SRS based on the uplink dynamic maximum transmit power $P_{dyna.max}$ by using the following formula (7).

$$P_{SRS} = min \left\{ \begin{array}{c} P_{dyna,max} \\ P_{CMAX} \\ P_{0\_SRS} + 10\log_{10}(2^{\mu} \cdot M_{RB}^{SRS}) + \alpha \cdot PL + \Delta_{TF} + h \end{array} \right\} \text{ [dBm] Formula (7)}$$

$P_{CMAX}$ is maximum transmit power configured for the terminal 100 in a communication protocol, and is related to a power level of the terminal 100.

$P_{0\_SRS}$ may be used to indicate power density that is of the SRS sent by the terminal 100 and that the network device 200 expects to receive, and the power density is density of power in frequency domain.

$\mu$ is used to indicate a subcarrier spacing. For specific explanations, refer to Formula (5) in the embodiment shown in FIG. 6. Details are not described herein again.

$M_{RB}^{SRS}$ indicates a quantity of RBs of the SRS.

$\alpha$ is a path loss compensation factor. For specific explanations, refer to Formula (5) in the embodiment shown in FIG. 6. Details are not described herein again.

PL represents a path loss, and is used to compensate for a path loss in signal transmission. For specific explanations, refer to Formula (5) in the embodiment shown in FIG. 6. Details are not described herein again.

$\Delta_{TF}$ is a transmit power adjustment item related to a transmission format, and may be used to indicate a power offset value related to a modulation and coding scheme and signal content (for example, whether there is uplink control information UCI and a size of the uplink control information). For specific explanations, refer to Formula (5) in the embodiment shown in FIG. 6. Details are not described herein again.

$h$ indicates a power control accumulation of the SRS.

The terminal 100 may calculate the power headroom $PH_{SRS}$ of the SRS based on the uplink dynamic maximum transmit power $P_{dyna.max}$ by using the following formula (8).

$$PH_{SRS} = \min\{P_{dyna,max}, P_{CMAX}\} - \{P_{0\_SRS} + 10\log_{10}(2^{\mu} \cdot M_{RB}^{SRS}) + \alpha \cdot PL + h\} \; [\text{dB}] \; \text{Formula (8)}$$

For text descriptions of parameters $P_{CMAX}$, $P_{0\_SRS}$, $\mu$, $M_{RB}^{SRS}$, $\alpha$, PL, and $h$ in Formula (8), refer to the foregoing formula (7). Details are not described herein again.

S705: The terminal 100 sends the uplink data to the network device 200 on the PUSCH at the transmit power $P_{PUSCH}$, and transmits the SRS to the network device 200 at the transmit power $P_{SRS}$.

For sending, by the terminal 100, the uplink data to the network device 200 on the PUSCH at the transmit power $P_{PUSCH}$, refer to step S605 in the embodiment shown in FIG. 6. Details are not described herein again.

When the PUSCH scheduled by the network device 200 for the terminal 100 and the SRS are transmitted in a same slot (slot), the terminal 100 may transmit the SRS only after transmission of the PUSCH and a corresponding demodulation reference signal (demodulation reference signal, DMRS) ends.

S706: The terminal 100 reports a power headroom report 2 to the network device 200. The power headroom report 2 includes the power headroom $PH_{PUSCH}$ of the PUSCH and the power headroom $PH_{SRS}$ of the SRS.

The terminal 100 may send the power headroom report (PHR) 2 and the uplink data together in a TB of the PUSCH to the network device 200.

S707: The network device 200 may measure a signal to interference plus noise ratio (signal to interfere plus noise radio, SINR) of the received SRS.

The SINR of the SRS is directly proportional to transmit power at which the terminal 100 sends the SRS. When the transmit power of the SRS decreases, the SINR decreases, and the network device 200 needs to reduce the modulation order of the MCS. When the transmit power of the SRS increases, the SINR increases, and the network device 200 may increase the modulation order of the MCS.

S708: The network device 200 may adjust the quantity of RBs of the PUSCH and/or the MCS based on the power headroom $PH_{PUSCH}$ of the PUSCH, the power headroom $PH_{SRS}$ of the SRS, and the SINR of the SRS, and determine resource information 3 of the PUSCH. The resource information 3 includes information such as a quantity of RBs of the PUSCH, an MCS, and a quantity of MIMO layers.

The network device 200 may adjust the modulation order of the MCS based on the SINR of the SRS, the power headroom of the SRS, and the power headroom of the PUSCH.

Specifically, the network device 200 may determine a signal-to-noise ratio (signal to noise ratio, SNR) of the PUSCH based on the SINR of the SRS, the power headroom of the SRS, and the power headroom of the PUSCH. The network device 200 may determine a modulation order of the MCS in the resource information 3 based on the SNR of the PUSCH and a correspondence between the SNR and the modulation order of the MCS.

The network device 200 may determine the SNR of the PUSCH by using the following formula (9):

$$SNR = SINR + PH_{SRS} - PH_{PUSCH} \; \text{Formula 9}$$

SNR is the signal-to-noise ratio of the PUSCH, *SINR* is the signal to interference plus noise ratio of the SRS, $PH_{SRS}$ is the power headroom of the SRS, and $PH_{PUSCH}$ is the power headroom of the PUSCH.

The network device 200 may adjust the quantity of RBs of the PUSCH based on the power headroom $PH_{PUSCH}$ of the PUSCH.

Specifically, the network device 200 may adjust an upper limit of the quantity of RBs of the PUSCH based on the power headroom $PH_{PUSCH}$ of the PUSCH. The network device 200 may determine the quantity of RBs of the PUSCH in the resource information 3 based on the upper limit of the quantity of RBs of the PUSCH. For example, when $PH_{PUSCH}>0$, the network device 200 may increase the upper limit of the quantity of RBs of the PUSCH. When $PH_{PUSCH}<0$, the network device 200 may decrease the upper limit of the quantity of RBs of the PUSCH. When $PH_{PUSCH}<0$, the network device 200 may keep the upper limit of the quantity of RBs of the PUSCH unchanged.

S709: The network device 200 delivers the resource information 3 of the PUSCH to the terminal 100 by using the downlink control information (DCI).

Specifically, in a 5G NR communication system, the network device 200 may deliver the resource information 3 of the PUSCH to the terminal 100 by using a DCI format 0_0 and a DCI format 0_1 that are carried on a PDCCH. In another communication system such as LTE, the network device 200 may send the resource information 3 to the terminal 100 by using another DCI format carried on the PDCCH.

S710: The network device 200 determines a transport block size (TBS) of the PUSCH based on the resource information 3 of the PUSCH.

The terminal 100 may determine a code rate of the MCS based on the modulation order of the MCS in the resource information 3. The terminal 100 may determine a quantity of information bits of a transport block of the PUSCH based on the quantity of RBs of the PUSCH, the modulation order of the MCS, the quantity of MIMO layers, and a code rate of the MCS in the resource information 3 of the PUSCH. Then, the terminal 100 may quantize the quantity of information bits of the transport block of the PUSCH, to obtain the transport block size (TBS) of the PUSCH.

For a method for calculating the transport block size (TBS) of the PUSCH, refer to content in section 38.214 in chapter 6.1.4.2 of a protocol of a release 15.60. Details are not described herein again.

After the transport block size of the PUSCH is determined based on the resource information 3 of the PUSCH, the method may return to the foregoing steps S703 to S709.

In the uplink power control method provided in this embodiment of this application, when the network device pre-schedules the PUSCH, the terminal does not skip sending of the PUSCH. Because the terminal adds UCI to the PUSCH and sends the UCI to the network device, the network device does not need to decode the PUCCH and the PUSCH at the same time, and all user equipment in a cell can be supported. Because there is no problem that the network device mistakenly considers DTX, there is no problem that power consumption of the terminal deteriorates when the network device schedules PUSCH retransmission and increases uplink transmit power because the network device mistakenly considers skipping of PUSCH transmission by the terminal as a bit error. In addition, there is no problem that a delay increases because the network device mistakenly considers a PUSCH bit error as that the terminal skips PUSCH transmission and does not schedule PUSCH retransmission.

A diagram of functional modules in a communication system according to an embodiment of this application is described below.

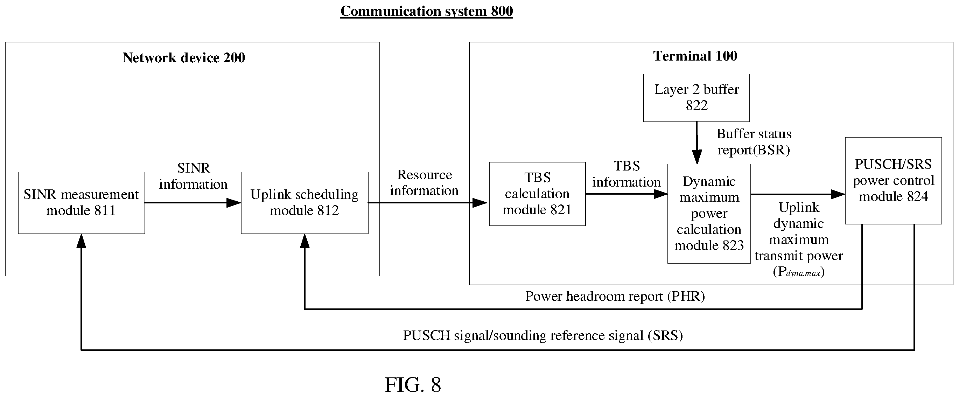

FIG. 8 is a diagram of functional modules in a communication system according to an embodiment of this application.

As shown in FIG. 8, a communication system 800 includes a terminal 100 and a network device 200. The network device 200 includes a SINR measurement module 811 and an uplink scheduling module 812. The terminal 100 may include a TBS calculation module 821, a layer-2 (RLC layer) buffer 822, a dynamic maximum power calculation module 823, and a PUSCH/SRS power control module 824.

The uplink scheduling module 812 may periodically pre-schedule a PUSCH resource for the terminal 100 by using DCI carried on a PDCCH. The DCI carries resource information on a PUSCH allocated by the uplink scheduling module 812 for the terminal 100. The resource information includes information such as a quantity of RBs of the PUSCH, an MCS, and a quantity of MIMO layers.

The TBS calculation module may calculate a TBS of the PUSCH based on the resource information sent by the uplink scheduling module 812, and send TBS information to the dynamic maximum power calculation module 823.

The dynamic maximum power calculation module 823 may dynamically adjust maximum uplink transmit power based on a relationship between the layer-2 buffer 822 and the TBS, and calculate uplink dynamic maximum transmit power $P_{dyna,max}$. The dynamic maximum power calculation module 823 may send the uplink dynamic maximum transmit power to the PUSCH/SRS power control module 824.

The PUSCH/SRS power control module 824 may calculate signal transmit power $P_{PUSCH}$ on the PUSCH, transmit power $P_{SRS}$ of an SRS, a power headroom $PH_{PUSCH}$ of the PUSCH, and a power headroom $PH_{SRS}$ of the SRS based on the uplink dynamic maximum transmit power.

The PUSCH/SRS power control module 824 may indicate a sending module (not shown in the figure) of the terminal 100 to send uplink data to the network device 200 at the transmit power $P_{PUSCH}$. When reporting a power headroom report (PHR) to the network device 200, the terminal 100 may add the PHR to the uplink data, and send the PHR and the uplink data together to the network device 200 on the PUSCH. The PHR includes the power headroom of the PUSCH. Optionally, the PHR may include the power headroom of the PUSCH and the power headroom of the SRS.

The PUSCH/SRS power control module 824 may further indicate the sending module (not shown in the figure) of the terminal 100 to send the SRS to the network device 200 at the transmit power $P_{SRS}$.

The SINR measurement module 811 may measure an SINR of the SRS sent by the terminal 100, and notify the uplink scheduling module 812 of information about the SINR.

The uplink scheduling module 812 may adjust, based on the power headroom report (PHR) and/or the SINR of the SRS, a quantity of RBs and a modulation order of an MCS that are used when the PUSCH is scheduled for the terminal 100 next time.

For specific content, refer to the method embodiment shown in FIG. 6 or FIG. 7. Details are not described herein again.

An embodiment of this application provides an uplink power control method applied to the foregoing communication system. The network device may periodically pre-schedule the PUSCH for the terminal, and the terminal may dynamically adjust maximum transmit power based on a transport block (transport block, TB) size in the PUSCH scheduled by the network device and an amount of to-be-sent uplink data. When the amount of the to-be-sent uplink data is far less than the TB size scheduled by the network device, the terminal may decrease the maximum transmit power, and report the maximum transmit power to the network device by using a power headroom report (power headroom report, PHR), so that the network device reduces the TB size and uplink transmit power of the terminal by reducing the quantity of resource blocks and/or the modulation order of the MCS. In this way, power consumption of the terminal is reduced while a delay of sending the uplink data by the terminal is reduced.

A schematic diagram of a structure of a terminal 100 according to another embodiment of this application is described below.

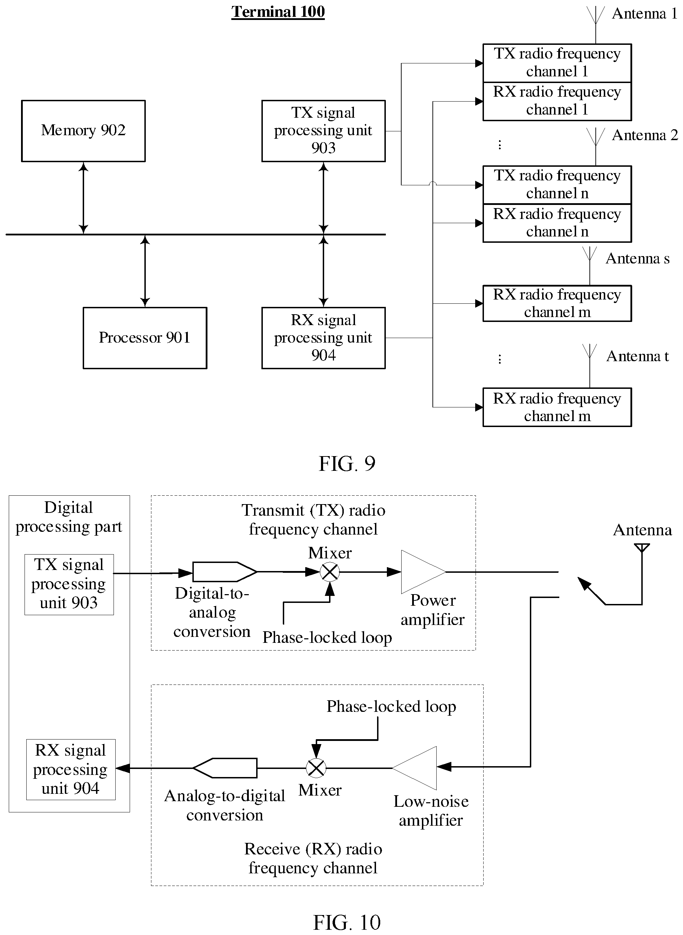

FIG. 9 is a schematic diagram of a structure of a terminal 100 according to another embodiment of this application.

As shown in FIG. 9, the terminal 100 may include a processor 901, a memory 902, a transmit (transmit, TX) signal processing unit 903, a receive (receive, RX) signal processing unit 904, n transmit (TX) radio frequency channels, m receive radio frequency channels, and t antennas. n, m, and t are positive integers. The processor 901, the memory 902, the transmit (transmit, TX) signal processing unit 903, and the receive (receive, RX) signal processing unit 904 may be connected by using a communication bus.

The memory 902 may be a static memory configured to store executable code and data, or may be a dynamic memory configured to store an instruction and dynamic data.

The processor 901 may be configured to control the TX signal processing unit 903 and the RX signal processing unit to send and receive a signal in a predefined manner. In this embodiment of this application, the processor 901 is configured to: dynamically adjust maximum uplink transmit power, and calculate transmit power and PHs of a PUSCH and an SRS based on the adjusted maximum uplink transmit power. For specific content of calculating the transmit power and the PHs of the PUSCH and the SRS, refer to the method embodiment shown in FIG. 6 or FIG. 7. Details are not described herein again.

The TX signal processing unit 903 may be configured to implement various signal processing functions of signal sending. The RX signal processing unit 904 may be configured to implement various signal processing functions of signal receiving.

The TX signal processing unit 903 and the RX signal processing unit 904 may be connected to the antenna by using a TX radio frequency channel and an RX radio frequency channel respectively.

The TX channel modulates a baseband signal to a carrier frequency and transmits the signal through the antenna.

The RX radio frequency channel demodulates a radio frequency signal received from an antenna array into a baseband signal, and sends the baseband signal to the RX signal processing unit 904 for processing. Some antennas can be configured to perform sending and receiving at the same time. Therefore, the antennas can be connected to the TX radio frequency channel and the RX radio frequency channel at the same time. Some antennas are configured to perform receiving only. Therefore, the antennas are connected only to the RX radio frequency channel. In addition, the TX radio frequency channel and the RX radio frequency channel may be connected to any antenna. For example, a TX radio frequency channel 1 and an RX radio frequency channel 1 are connected to an antenna 2, and may be flexibly configured based on a service requirement.

A structure of a radio frequency channel in this embodiment of this application is described below.

FIG. 10 is a schematic diagram of a structure of a radio frequency channel according to an embodiment of this application.

As shown in FIG. 10, on the TX radio frequency channel, a digital signal output by the TX signal processing unit 903 is converted into a low-frequency analog signal through digital-to-analog conversion, and then the low-frequency analog signal is modulated to a carrier by a frequency mixer. The carrier signal is generated by a phase-locked loop. A modulated high-frequency signal is amplified by a power amplifier and sent by the antenna.

On the RX radio frequency channel, a high-frequency signal received by the antenna is amplified by a low-noise amplifier, and then, a high-frequency analog signal is down-converted into a low-frequency analog signal by a mixer. Then, analog-to-digital conversion is performed to obtain a digital signal, and the digital signal is sent to the RX signal processing unit 904 for signal receiving processing.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. An uplink power control system, comprising a terminal and a network device, wherein

   the network device is configured to deliver first resource information of a physical uplink shared channel PUSCH to the terminal by using downlink control information DCI carried on a physical downlink control channel PDCCH;
   the terminal is configured to report a first power headroom of the PUSCH to the network device when a transport block TB size corresponding to the first resource information is equal to a data amount of to-be-sent uplink data in a buffer at a radio link control RLC layer;
   the terminal is further configured to report a second power headroom of the PUSCH to the network device when the TB size corresponding to the first resource information is greater than the data amount of the to-be-sent uplink data, wherein the second power headroom is less than the first power headroom; and
   the network device is further configured to deliver second resource information to the terminal based on the second power headroom of the PUSCH by using the DCI carried on the PDCCH, wherein the second resource information is different from the first resource information.

2. The system according to claim 1, wherein the terminal is specifically configured to:

   report a first power headroom report PHR to the network device when the transport block TB size corresponding to the first resource information is equal to the data amount of the to-be-sent uplink data, wherein the first PHR comprises the first power headroom of the PUSCH; or
   report a second PHR to the network device when the transport block TB size corresponding to the first resource information is equal to the data amount of the to-be-sent uplink data, wherein the second PHR comprises the second power headroom of the PUSCH.

3. The system according to claim 1, wherein the terminal is further configured to report a third power headroom of the PUSCH to the network device when the TB size corresponding to the first resource information is less than the data amount of the to-be-sent uplink data, wherein the third power headroom is greater than the first power headroom; and the network device is further configured to deliver third resource information to the terminal based on the third power headroom of the PUSCH by using the DCI carried on the PDCCH, wherein the third resource information is different from the first resource information.

4. The system according to claim 1, wherein that the second resource information is different from the first resource information specifically comprises:
   when the second power headroom is greater than 0, a quantity of resource blocks RBs of the PUSCH in the second resource information is greater than a quantity of RBs of the PUSCH in the first resource information, and/or a modulation order of a modulation and coding scheme MCS in the second resource information is greater than a modulation order of an MCS in the first resource information.

5. The system according to claim 1 or 4, wherein that the second resource information is different from the first resource information specifically comprises:
   when the second power headroom is less than 0, the quantity of resource blocks RBs of the PUSCH in the second resource information is less than the quantity of RBs of the PUSCH in the first resource information, and/or the modulation order of the MCS in the second resource information is less than the modulation order of the MCS in the first resource information.

6. The system according to claim 1, 4, or 5, wherein that the second resource information is different from the first resource information specifically comprises:
   when the second power headroom is equal to 0, the quantity of resource blocks RBs of the PUSCH in the second resource information is equal to the quantity of RBs of the PUSCH in the first resource information, and the modulation order of the MCS in the second resource information is the same as the modulation order of the MCS in the first resource information.

7. The system according to claim 1, wherein the terminal is further configured to:

when the TB size corresponding to the first resource information is greater than the amount of the to-be-sent uplink data, determine first uplink dynamic maximum transmit power based on the first resource information and the amount of the to-be-sent uplink data;
determine transmit power of the PUSCH and the second power headroom based on the first uplink dynamic maximum transmit power; and
send the to-be-sent data in the buffer at the RLC layer to the network device at the transmit power of the PUSCH.

8. The system according to claim 7, wherein the terminal is specifically configured to: when the TB size corresponding to the first resource information is greater than the amount of the to-be-sent uplink data, determine the first uplink dynamic maximum transmit power by using the following formula:

$$P_{dyna.max} = P_{CMAX} - \Delta_{step},$$

wherein
$P_{dyna,max}$ is the first uplink dynamic maximum transmit power, $P_{CMAX}$ is maximum transmit power configured for the terminal in a communication protocol, and $\Delta_{step}$ is a preset power value.

9. The system according to claim 7, wherein the terminal is specifically configured to determine the transmit power of the PUSCH based on the first uplink dynamic maximum transmit power by using the following formula:

$$P_{PUSCH} = min \begin{Bmatrix} P_{dyna,max} \\ P_{CMAX} \\ P_{0\_PUSCH} + 10\log_{10}(2^{\mu} \cdot M_{RB}^{PUSCH}) + \alpha \cdot PL + \Delta_{TF} + f \end{Bmatrix},$$

wherein
$P_{PUSCH}$ is the transmit power of the PUSCH, $P_{dyna,max}$ is the first uplink dynamic maximum transmit power, $P_{CMAX}$ is maximum transmit power configured for the terminal in a communication protocol, $P_{0\_PUSCH}$ is nominal power, the nominal power is used to represent power density of a signal that is sent by the terminal on the PUSCH and that the network device expects to receive, $\mu$ is a subcarrier spacing, $M_{RB}^{PUSCH}$ is a first resource block quantity of the PUSCH, $\alpha$ is a path loss compensation factor, $PL$ is a path loss, $\Delta_{TF}$ is a transmit power adjustment item associated with a transmission format, and $f$ is a power control accumulation of the PUSCH.

10. The system according to any one of claims 7 to 9, wherein the terminal is specifically configured to determine the second power headroom of the PUSCH based on the first uplink dynamic maximum transmit power by using the following formula:

$$PH_{PUSCH} = min\{P_{dyna,max}, P_{CMAX}\} - \{P_{0\_PUSCH} + 10\log_{10}(2^{\mu} \cdot M_{RB}^{PUSCH}) + \alpha \cdot PL + \Delta_{TF} + f\},$$

wherein
$PH_{PUSCH}$ is the power headroom of the PUSCH, $P_{dyna,max}$ is the first uplink dynamic maximum transmit power, $P_{CMAX}$ is maximum transmit power configured for the terminal in a communication protocol, $P_{0\_PUSCH}$ is nominal power, the nominal power is used to represent power density of a signal that is sent by the terminal on the PUSCH and that the network device expects to receive, $\mu$ is a subcarrier spacing, $M_{RB}^{PUSCH}$ is a first resource block quantity of the PUSCH, $\alpha$ is a path loss compensation factor, $PL$ is a path loss, $\Delta_{TF}$ is a transmit power adjustment item associated with a transmission format, and $f$ is a power control accumulation of the PUSCH.

11. The system according to claim 3, wherein the terminal is further configured to:

when the TB size corresponding to the first resource information is less than the amount of the to-be-sent uplink data, determine second uplink dynamic maximum transmit power by using the following formula:

$$P_{dyna.max} = P_{CMAX} + max\{10\,log_{10}(2^{\mu} \cdot B_{RLC}/TBS)\,,0\},$$

wherein
$P_{dyna.max}$ is the second uplink dynamic maximum transmit power, $P_{CMAX}$ is maximum transmit power configured for the terminal in a communication protocol, $\mu$ is a subcarrier spacing, $B_{RLC}$ is the data amount of the to-be-sent uplink data, and *TBS* is the TB size corresponding to the first resource information;
determine transmit power of the PUSCH and the third power headroom based on the second uplink dynamic maximum transmit power; and
send the to-be-sent data in the buffer at the RLC layer to the network device at the transmit power of the PUSCH.

12. The system according to claim 1, wherein the terminal is further configured to determine transmit power of a sounding reference signal SRS and a power headroom of the SRS based on the first uplink dynamic maximum transmit power;

the terminal is further configured to send the SRS to the network device at the transmit power of the SRS;
the terminal is further configured to send the power headroom of the SRS to the network device;
the network device is further configured to measure a signal to interference plus noise ratio SINR of the received SRS; and
the network device is specifically configured to:
deliver the second resource information to the terminal based on the second power headroom of the PUSCH, the power headroom of the SRS, and the SINR of the SRS.

13. The system according to claim 12, wherein the terminal is specifically configured to determine the transmit power of the SRS based on the first uplink dynamic maximum transmit power by using the following formula:

$$P_{SRS} = min\left\{\begin{array}{c} P_{dyna,max} \\ P_{CMAX} \\ P_{0\_SRS} + 10\log_{10}(2^{\mu} \cdot M_{RB}^{SRS}) + \alpha \cdot PL + \Delta_{TF} + h \end{array}\right\},$$

wherein
$P_{SRS}$ is the transmit power of the SRS, $P_{dyna,max}$ is the first uplink dynamic maximum transmit power, $P_{CMAX}$ is maximum transmit power configured for the terminal in a communication protocol, $P_{0\_SRS}$ is nominal power of the SRS, the nominal power of the SRS is used to represent power density of the SRS that is sent by the terminal and that the network device expects to receive, $\mu$ is a subcarrier spacing, $M_{RB}^{SRS}$ is a resource block quantity of the SRS, $\alpha$ is a path loss compensation factor, *PL* is a path loss, $\Delta_{TF}$ is a transmit power adjustment item associated with a transmission format, and *h* is a power control accumulation of the SRS.

14. The system according to claim 12, wherein the terminal is specifically configured to determine the power headroom of the SRS based on the uplink dynamic maximum transmit power by using the following formula:

$$\text{PH}_{SRS} = min\{P_{dyna,max}, P_{CMAX}\} - \{P_{0\_SRS} + 10\log_{10}(2^{\mu} \cdot M_{RB}^{SRS}) + \alpha \cdot PL + h\},$$

wherein
$\text{PH}_{SRS}$ is the transmit power of the SRS, $P_{dyna,max}$ is the uplink dynamic maximum transmit power, $P_{CMAX}$ is maximum transmit power configured for the terminal in a communication protocol, $P_{0\_SRS}$ is nominal power of the SRS, the nominal power of the SRS is used to represent power density of the SRS that is sent by the terminal and that the network device expects to receive, $\mu$ is a subcarrier spacing, $M_{RB}^{SRS}$ is a resource block quantity of the SRS, $\alpha$ is a path loss compensation factor, *PL* is a path loss, and *h* is a power control accumulation of the SRS.

15. The system according to claim 7, wherein the terminal is specifically configured to:
send, on a TB corresponding to the first resource information, a first part of data in the buffer at the RLC layer to the network device at the transmit power of the PUSCH.

16. The system according to claim 11, wherein the terminal is specifically configured to:
send, on a TB corresponding to the first resource information, all data in a buffer at the data link layer to the network device at the transmit power of the PUSCH, and send padding data to the network device in a remaining part of the TB of the first resource information.

17. An uplink power control method, comprising:

receiving, by a terminal, first resource information that is of a PUSCH and that is delivered by a network device by using DCI carried on a PDCCH;
reporting, by the terminal, a first power headroom of the PUSCH to the network device when a TB size corresponding to the first resource information is equal to a data amount of to-be-sent uplink data in a buffer at an RLC layer;
reporting, by the terminal, the first power headroom of the PUSCH to the network device when the TB size corresponding to the first resource information is greater than the data amount of the to-be-sent uplink data; and
receiving, by the terminal, second resource information delivered by the network device based on a second power headroom of the PUSCH by using the DCI carried on the PDCCH, wherein the second resource information is different from the first resource information.

18. The method according to claim 17, wherein the reporting, by the terminal, a first power headroom of the PUSCH to the network device specifically comprises:

reporting, by the terminal, a first power headroom report PHR to the network device, wherein the first PHR comprises the first power headroom of the PUSCH; and
the reporting, by the terminal, a second power headroom of the PUSCH to the network device specifically comprises:
reporting, by the terminal, a second PHR to the network device, wherein the second PHR comprises the second power headroom of the PUSCH.

19. The method according to claim 17, wherein the method further comprises:

reporting a third power headroom of the PUSCH to the network device when the TB size corresponding to the first resource information is less than the data amount of the to-be-sent uplink data, wherein the third power headroom is greater than the first power headroom; and
receiving, by the terminal, second resource information delivered by the network device based on the third power headroom by using the DCI carried on the PDCCH, wherein the third resource information is different from the first resource information.

20. The method according to claim 17, wherein that the second resource information is different from the first resource information specifically comprises:

when the second power headroom is greater than 0, a quantity of resource blocks RBs of the PUSCH in the second resource information is greater than a quantity of RBs of the PUSCH in the first resource information, and/or a modulation order of a modulation and coding scheme MCS in the second resource information is greater than a modulation order of an MCS in the first resource information;
when the second power headroom is less than 0, the quantity of resource blocks RBs of the PUSCH in the second resource information is less than the quantity of RBs of the PUSCH in the first resource information, and/or the modulation order of the MCS in the second resource information is less than the modulation order of the MCS in the first resource information; and
when the second power headroom is equal to 0, the quantity of resource blocks RBs of the PUSCH in the second resource information is equal to the quantity of RBs of the PUSCH in the first resource information, and the modulation order of the MCS in the second resource information is the same as the modulation order of the MCS in the first resource information.

21. The method according to claim 17, wherein the method further comprises:

when the TB size corresponding to the first resource information is greater than the amount of the to-be-sent uplink data, determining, by the terminal, first uplink dynamic maximum transmit power based on the first resource information and the amount of the to-be-sent uplink data;

determining, by the terminal, transmit power of the PUSCH and the second power headroom based on the first uplink dynamic maximum transmit power; and

sending, by the terminal, the to-be-sent data in the buffer at the RLC layer to the network device at the transmit power of the PUSCH.

22. The method according to claim 17, wherein the method further comprises:

determining, by the terminal, transmit power of a sounding reference signal SRS and power headroom of the SRS based on the first uplink dynamic maximum transmit power;

sending, by the terminal, the SRS to the network device by using the transmit power of the SRS; and

sending, by the terminal, the power headroom of the SRS to the network device; and

the receiving, by the terminal, second resource information delivered by the network device based on a second power headroom of the PUSCH by using the DCI carried on the PDCCH specifically comprises:

delivering, by the terminal, the second resource information to the terminal based on the second power headroom of the PUSCH, the power headroom of the SRS, and a detected SINR of the SRS.

23. A terminal, comprising one or more processors and one or more memories, wherein the one or more memories are coupled to the one or more processors, the one or more memories are configured to store computer program code, the computer program code comprises computer instructions, and when the one or more processors execute the computer instructions, the terminal is enabled to perform the method according to any one of claims 17 to 22.

24. A computer storage medium, comprising computer instructions, wherein when the computer instructions are run on a terminal, the terminal is enabled to perform the method according to any one of claims 17 to 22.

25. A chip, comprising a processor, wherein the processor is configured to invoke, from a memory, instructions stored in the memory and run the instructions, so that a terminal in which the chip is mounted is enabled to perform the method according to any one of claims 17 to 22.

Base station:

Physical downlink control channel PDCCH (UL grant information)

Physical downlink control channel PDCCH (UL grant information)

...

Physical downlink control channel PDCCH (UL grant information)

Terminal:

Scheduling request (SR)

Physical uplink shared channel PUSCH (Buffer status report (BSR))

Physical uplink shared channel PUSCH

Physical uplink shared channel PUSCH (Buffer status report (BSR))

FIG. 1

Periodic scheduling

Base station:

Physical downlink control channel PDCCH (UL grant information)

Physical downlink control channel PDCCH (UL grant information)

...

Physical downlink control channel PDCCH (UL grant information)

Terminal:

Physical uplink shared channel PUSCH

Physical uplink shared channel PUSCH

FIG. 2

Network
device 200

Terminal
100

FIG. 3

Terminal 100

Antenna 1                          Antenna 2

| Mobile communication module 2G/3G/4G/5G [150] | Wireless communication module BT/WLAN/GNSS/NFC/IR/FM [160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

External memory interface [120]

Processor [110]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

USB interface [130]

Charging input

Charging management module [140]

Power management module [141]

Battery [142]

FIG. 4

FIG. 5

| Network device 200 | | Terminal 100 |
|---|---|---|

S601: Deliver resource information 1 of a PUSCH (including information such as a quantity of RBs of the PUSCH, a modulation order of an MCS, and a quantity of MIMO layers) by using downlink control information (DCI)

S602: Determine a transport block size (TBS) of the PUSCH based on the resource information 1 of the PUSCH

S603: Determine uplink dynamic maximum transmit power $P_{dyna.max}$ based on an amount of uplink to-be-sent data and the TBS of the PUSCH

S604: Determine transmit power $P_{PUSCH}$ of the PUSCH and a power headroom $PH_{PUSCH}$ of the PUSCH based on the uplink dynamic maximum transmit power $P_{dyna.max}$

S605: Send uplink data on the PUSCH at the transmit power $P_{PUSCH}$

S606: Report a power headroom report 1 (including information such as the power headroom $PH_{PUSCH}$ of the PUSCH)

S607: Adjust the quantity of RBs of the PUSCH and/or the modulation order of the MCS based on the power headroom $PH_{PUSCH}$ of the PUSCH, and determine resource information 2 of the PUSCH (including information such as a quantity of RBs of the PUSCH, a modulation order of an MCS, and a quantity of MIMO layers)

S608: Deliver the resource information 2 of the PUSCH by using the downlink control information (DCI)

S609: Determine the transport block size (TBS) of the PUSCH based on the resource information 2 of the PUSCH

FIG. 6

| Network device 200 | | Terminal 100 |
|---|---|---|

S701: Deliver resource information 1 of a PUSCH (including information such as a quantity of RBs of the PUSCH, an MCS, and a quantity of MIMO layers) by using downlink control information (DCI)

S702: Determine a transport block size (TBS) of the PUSCH based on the resource information 1 of the PUSCH

S703: Determine uplink dynamic maximum transmit power $P_{dyna.max}$ based on an amount of uplink to-be-sent data and the TBS

S704: Determine transmit power $P_{PUSCH}$ of the PUSCH, a power headroom $PH_{PUSCH}$ of the PUSCH, transmit power of an SRS, and a power headroom $PH_{SRS}$ of the SRS based on the uplink dynamic maximum transmit power $P_{dyna.max}$

S705: Send uplink data on the PUSCH at the transmit power $P_{PUSCH}$, and send the SRS at the transmit power $P_{SRS}$

S706: Report a power headroom report 2 (including the power headroom $PH_{PUSCH}$ of the PUSCH and the power headroom $PH_{SRS}$ of the SRS)

S707: Measure a signal to interference plus noise ratio (SINR) of the received SRS

S708: Adjust the quantity of RBs of the PUSCH and/or the MCS based on the power headroom $PH_{PUSCH}$ of the PUSCH, the power headroom $PH_{SRS}$ of the SRS, and the SINR of the SRS, and determine resource information 3 of the PUSCH (including information such as a quantity of RBs of the PUSCH, an MCS, and a quantity of MIMO layers)

S709: Deliver the resource information 3 of the PUSCH by using the downlink control information

S710: Determine the transport block size (TBS) of the PUSCH based on the resource information 3 of the PUSCH

FIG. 7

## Communication system 800

FIG. 8

**Terminal 100**

Antenna 1

| TX radio frequency channel 1 |
| RX radio frequency channel 1 |

Memory 902

TX signal processing unit 903

Antenna 2

| TX radio frequency channel n |
| RX radio frequency channel n |

Antenna s

| RX radio frequency channel m |

Processor 901

RX signal processing unit 904

Antenna t

| RX radio frequency channel m |

FIG. 9

Digital processing part

TX signal processing unit 903

Transmit (TX) radio frequency channel

Mixer

Digital-to-analog conversion

Phase-locked loop

Power amplifier

Antenna

RX signal processing unit 904

Phase-locked loop

Analog-to-digital conversion

Mixer

Low-noise amplifier

Receive (RX) radio frequency channel

FIG. 10

<table>
<tr><td colspan="2" align="center">**INTERNATIONAL SEARCH REPORT**</td><td>International application No.<br>**PCT/CN2021/116433**</td></tr>
</table>

| A. | CLASSIFICATION OF SUBJECT MATTER |
|---|---|

H04W 52/14(2009.01)i; H04W 52/36(2009.01)i

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 上行功率控制, 功率余量, 传输块, 缓存, 填充, 大于, 等于, 小于, 资源块, 物理上行共享信道, 上行授权, 占比, 比例, PUSCH, power headroom report, PHR, transport block, TB, size, buffer, equal, greater, less, larger, smaller, than, RB, UL grant

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 110012533 A (DATANG MOBILE COMMUNICATIONS EQUIPMENT CO., LTD.) 12 July 2019 (2019-07-12)<br>  description paragraphs [0005]-[0108] | 1-25 |
| A | CN 111010739 A (DALIAN GONGJIN TECHNOLOGY CO., LTD.) 14 April 2020 (2020-04-14)<br>  entire document | 1-25 |
| A | US 2018084546 A1 (ASUSTEK COMPUTER INC.) 22 March 2018 (2018-03-22)<br>  entire document | 1-25 |
| A | ERICSSON. "Buffer Status Report Indication for Early Data Transmission"<br>*3GPP TSG-RAN WG2 #102 R2-1807798,* 11 May 2018 (2018-05-11),<br>  entire document | 1-25 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 September 2021** | **01 November 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 110012533 | A | 12 July 2019 | CN | 110012533 | B | 25 September 2020 |
| CN | 111010739 | A | 14 April 2020 | None | | | |
| US | 2018084546 | A1 | 22 March 2018 | EP | 3297343 | A3 | 20 June 2018 |
| | | | | US | 10433301 | B2 | 01 October 2019 |
| | | | | EP | 3297343 | A2 | 21 March 2018 |

International application No.

**PCT/CN2021/116433**

Form PCT/ISA/210 (patent family annex) (January 2015)

39

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011069900